# EUROPEAN PATENT APPLICATION

(11) **EP 3 543 006 A1**
(43) Date of publication of application: **25.09.2019**
(21) Application number: 17871817.7
(22) Date of filing: 14.11.2017
(51) Int. Cl.: B32B 17/10, B32B 27/00, B32B 27/18, B60J 1/00, B60S 1/02, C03C 27/12

(54) **ANTIFOGGING LAMINATE AND METHOD FOR ATTACHING ANTIFOGGING SHEET**

(30) Priority: 15.11.2016 JP 2016222788
(71) Applicant: Nippon Sheet Glass Company, Limited, Tokyo 108-6321 (JP)
(72) Inventor: SHIRASUNA, Yasumitsu, Tokyo 108-6321 (JP); OYA, Kazuaki, Tokyo 108-6321 (JP); TERANISHI, Toyoyuki, Tokyo 108-6321 (JP)
(74) Representative: Mewburn Ellis LLP
(86) International application number: PCT/JP2017/040983
(87) International publication number: WO 2018/092779

(57) **Abstract**

The present invention provides an antifog laminate configured to be attached to an information acquisition region of a windshield that includes a laminated glass that is located opposite to an information acquisition device for acquiring information from the outside of a vehicle by emitting and/or receiving light, at least a portion of the laminated glass being curved, and the laminated glass having at least one information acquisition region through which the light passes, the antifog laminate including an antifog sheet including a sticky layer, a substrate film, and an antifog layer that are layered in this order, a sheet-shaped protective material that removably covers the antifog layer and is larger than the antifog layer, and a first protective sheet that removably covers the sticky layer.

## Description

### Technical Field

The present invention relates to an antifog laminate and a method for attaching an antifog sheet.

### Background Art

In recent years, safety performance of automobiles has dramatically improved. For example, a safety system has been proposed that detects a distance to a preceding vehicle and its speed and automatically operates a brake when the preceding vehicle comes abnormally close in order to avoid collision with the preceding vehicle. Such a system measures the distance to the preceding vehicle or the like using a laser radar or a camera. The laser radar or camera is typically arranged on the inner side of a windshield and measurement is performed by emitting light such as infrared rays forward (Patent Literature 1, for example).

As described above, measurement devices such as the laser radar and the camera are arranged on the inner surface side of a glass plate that constitutes the windshield and light is emitted or received through the glass plate. However, the glass plate may fog up on cold days and in cold regions. If the glass plate fogs up, there is a risk that the measurement devices cannot accurately emit or receive light. This may result in a failure to accurately calculate a distance between vehicles or the like.

The above-described problem may arise not only in measurement devices that measure a distance between vehicles but also in general information acquisition devices that acquire information from the outside of a vehicle by receiving light such as a rain sensor, a light sensor, or an optical beacon, for example.

To solve this problem, an antifog sheet described in Patent Literature 2 may be used, for example. That is, it is thought that fogging of the windshield is prevented if this antifog sheet is attached to an information acquisition region of the windshield through which light passes.

### Citation List

### Patent Literature

Patent Literature 1: JP 2006-96331A
Patent Literature 2: JP 2013-99879A

### Summary of Invention

### Technical Problem

However, windshields are typically curved, and therefore it is not easy to attach an antifog sheet to a windshield. The present invention was made to solve this problem, and its object is to provide an antifog laminate and a method for attaching an antifog sheet with which an antifog sheet can be easily attached to an information acquisition region of a windshield.

### Solution to Problem

An antifog laminate according to the present invention is an antifog laminate configured to be attached to an information acquisition region of a windshield that includes a laminated glass that is located opposite to an information acquisition device for acquiring information from the outside of a vehicle by emitting and/or receiving light, at least a portion of the laminated glass being curved, and the laminated glass having at least one information acquisition region through which the light passes, the antifog laminate including:
an antifog sheet including a sticky layer, a substrate film, and an antifog layer that are layered in this order;
a sheet-shaped protective material that removably covers the antifog layer and is larger than the antifog layer; and
a first protective sheet that removably covers the sticky layer.

In the above-described antifog laminate, the protective material may include:
a second protective sheet that removably covers the antifog layer; and
a sheet-shaped attachment jig that is attached to the second protective sheet and is larger than the second protective sheet.

In the above-described antifog laminate, a temporal fixing member for temporarily fixing the protective material to the laminated glass may be provided on a surface of the protective material facing the antifog layer.

In the above-described antifog laminate, the windshield may further include an attachment member that is fixed to the laminated glass and is configured to fix the information acquisition device to the laminated glass,
the attachment member may be fixed to the laminated glass so as to surround the information acquisition region and have an attachment opening to which the information acquisition device is attached opposite to the information acquisition region, and
a length between at least one pair of opposite sides of the protective material may correspond to a length of the attachment opening in at least one of a lengthwise direction and a lateral direction.

A method for attaching an antifog sheet according to the present invention is a method for attaching an antifog sheet to an information acquisition region of a windshield that includes a laminated glass that is located opposite to an information acquisition device for acquiring information from the outside of a vehicle by emitting and/or receiving light, at least a portion of the laminated glass being curved, and the laminated glass having at least one information acquisition region through which the light passes, the method including steps of:
preparing an antifog laminate that includes
   an antifog sheet including a sticky layer, a substrate film, and an antifog layer that are layered in this order,
   a sheet-shaped protective material that removably covers the antifog layer and is larger than the antifog layer, and
   a first protective sheet that removably covers the sticky layer,
removing the first protective sheet and attaching the sticky layer to the information acquisition region; and
removing the protective material.

The above-described method for attaching an antifog sheet may further include, before the step of attaching the sticky layer, a step of temporarily fixing a region of the protective material other than a region where the antifog layer is provided outside the information acquisition region of the laminated glass.

In the above-described method for attaching an antifog sheet, in the step of temporarily fixing, a portion of the protective material on an upper side of the antifog sheet may be temporarily fixed to the laminated glass.

In the above-described method for attaching an antifog sheet, the windshield may further include an attachment member that is fixed to the laminated glass and is configured to fix the information acquisition device to the laminated glass,
the attachment member may be fixed to the laminated glass so as to surround the information acquisition region and have an attachment opening to which the information acquisition device is attached opposite to the information acquisition region, and
a length between at least one pair of opposite sides of the protective material may correspond to a length of the attachment opening in at least one of a lengthwise direction and a lateral direction.

### Advantageous Effects of Invention

According to the present invention, an antifog sheet can be easily attached to an information acquisition region of a windshield.

### Brief Description of Drawings

FIG. 1 is a cross-sectional view of one embodiment of a windshield according to the present invention.
FIG. 2 is a plan view of FIG. 1.
FIG. 3 is a cross-sectional view of a laminated glass.
FIGS. 4 (a) and 4 (b) are a front view and a cross-sectional view, respectively, showing a depth of bend of a curved laminated glass.
FIG. 5 is a schematic plan view showing thickness measurement positions on a laminated glass.
FIG. 6 is a plan view of a glass plate.
FIG. 7 is an enlarged plan view of a center mask layer.
FIG. 8 is a cross-sectional view of FIG. 7.
FIG. 9 is a cross-sectional view of an antifog laminate.
FIG. 10 is a plan view of the antifog laminate.
FIG. 11 is a diagram showing a state in which waterdrops are attached to an antifog layer.
FIG. 12 is a diagram showing a state in which waterdrops are attached to the antifog layer.
FIGS. 13(a) and 13(b) are diagrams showing a bracket from the vehicle exterior side and the vehicle interior side, respectively.
FIG. 14 is a diagram showing a sensor from the vehicle exterior side.
FIG. 15 is a side view showing an example of a manufacturing method of a glass plate.
FIG. 16 is a plan view showing an attached state of the antifog sheet.
FIG. 17 is a plan view showing an attached state of the bracket.
FIG. 18 is a plan view for explaining attachment of the antifog sheet.
FIG. 19 is a cross-sectional view for explaining attachment of the antifog sheet.
FIG. 20 is a cross-sectional view for explaining attachment of the antifog sheet.
FIG. 21 is a cross-sectional view for explaining attachment of the antifog sheet.
FIG. 22 is a cross-sectional view for explaining attachment of the antifog sheet.
FIG. 23 is a cross-sectional view of another example of the antifog laminate.

### Description of Embodiments

The following describes one embodiment of an antifog laminate and a method for attaching an antifog sheet according to the present invention, with reference to the drawings. The following first describes one embodiment in which a measurement unit for measuring a distance between vehicles or the like is attached to a windshield, and thereafter describes an antifog laminate.

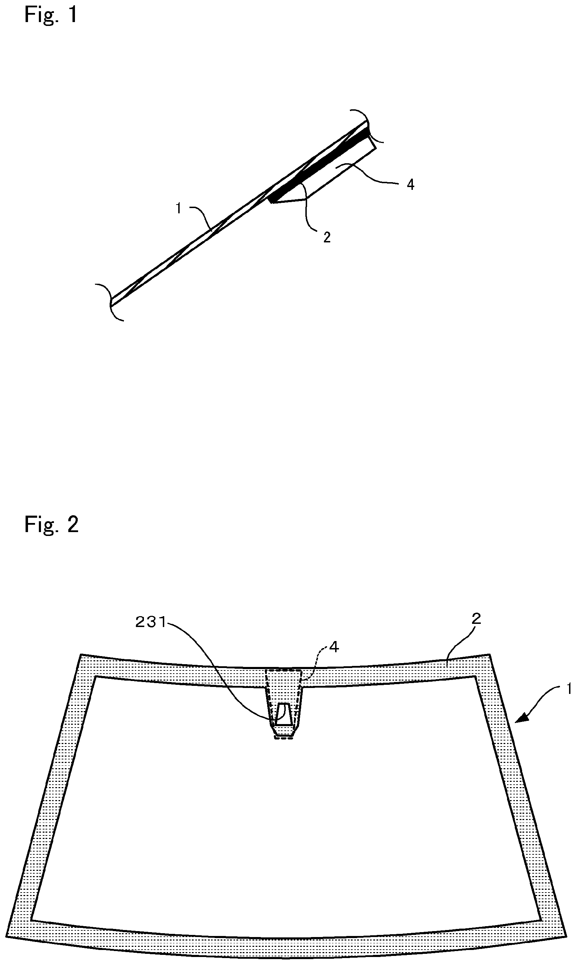

FIG. 1 is a cross-sectional view of a windshield according to this embodiment and FIG. 2 is a plan view of FIG. 1. As shown in FIGS. 1 and 2, the windshield according to this embodiment includes a laminated glass 1 and a mask layer 2 that is formed on a vehicle interior side surface of the laminated glass 1, and a measurement unit 4 for measuring a distance between vehicles is attached to the mask layer 2. An opening 231 is formed in the mask layer 2, and light is emitted from or received by the measurement unit 4 through this opening 231. An antifog sheet is attached to a region of an inner surface of the laminated glass 1 that corresponds to the opening 231 of the mask layer 2. Although respective members will be described with reference to the drawings, an antifog layer is omitted in some of the drawings.

### 1. Laminated glass

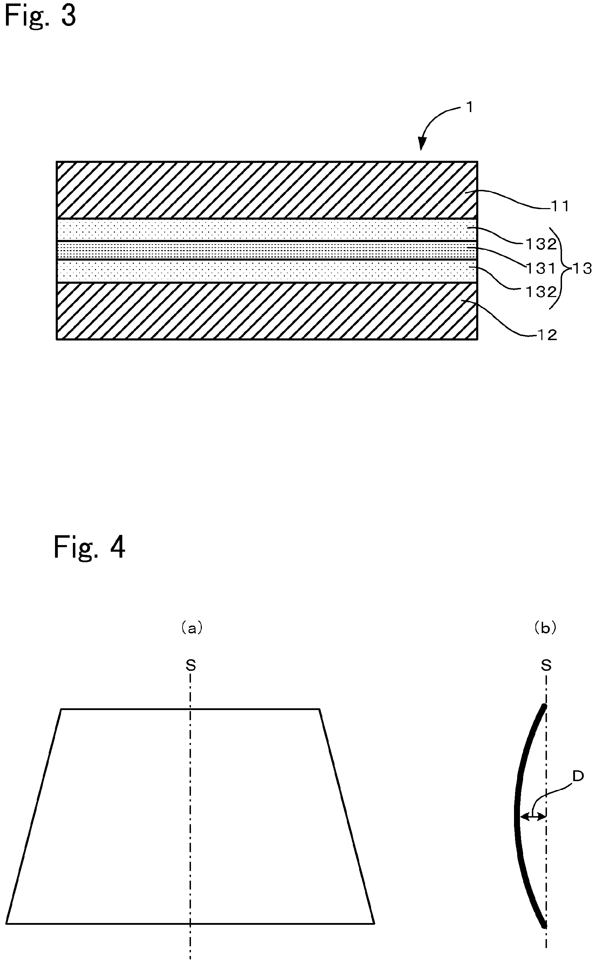

FIG. 3 is a cross-sectional view of the laminated glass. As shown in this figure, the laminated glass 1 includes an outer glass plate 11 and an inner glass plate 12, and an interlayer 13 made of resin is arranged between the glass plates 11 and 12.

### 1-1. Outer glass plate and inner glass plate

First, the outer glass plate 11 and the inner glass plate 12 will be described. Known glass plates can be used as the outer glass plate 11 and the inner glass plate 12, and these glass plates may be made of heat-ray absorbing glass, regular clear glass, green glass, or UV green glass. However, the glass plates 11 and 12 need to realize visible light transmittance that conforms to the safety standards of the country in which the automobile is to be used. For example, adjustments can be made so that the outer glass plate 11 ensures a required solar absorptance and the inner glass plate 12 provides visible light transmittance that meets safety standards. The following shows an example of clear glass, an example of heat-ray absorbing glass, and an example of soda lime-based glass.

### Clear glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃) in terms of Fe₂<O₃: 0.08 to 0.14 mass%

### Heat-ray absorbing glass

With regard to the composition of heat-ray absorbing glass, a composition obtained, which is based on the composition of clear glass, by setting the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the components (mainly SiO₂ and Al₂O₃) forming the framework of glass by an amount corresponding to the increases in T-Fe₂O₃, CeO₂, and TiO₂ can be used, for example.

### Soda lime-based glass

SiO₂: 65 to 80 mass%
Al₂O₃: 0 to 5 mass%
CaO: 5 to 15 mass%
MgO: at least 2 mass%
NaO: 10 to 18 mass%
K₂O: 0 to 5 mass%
MgO + CaO: 5 to 15 mass%
Na₂O + K₂0: 10 to 20 mass%
SO₃: 0.05 to 0.3 mass%
B₂O₃: 0 to 5 mass%
Total iron oxide (T-Fe₂O₃) in terms of Fe₂O_{3:} 0.02 to 0.03 mass%

Although there is no particular limitation on the thickness of the laminated glass according to this embodiment, the total thickness of the outer glass plate 11 and the inner glass plate 12 is preferably set to 2.4 to 5.0 mm, more preferably 2.6 to 4.6 mm, and even more preferably 2.7 to 3.2 mm, from the viewpoint of weight reduction. As described above, it is necessary to reduce the total thickness of the outer glass plate 11 and the inner glass plate 12 in order to reduce the weight. Although there is no particular limitation on the thicknesses of the outer glass plate 11 and the inner glass plate 12, the thicknesses of these glass plates can be determined as described below, for example.

Durability against external damage and impact resistance are mainly required for the outer glass plate 11. For example, if the laminated glass is used as a windshield of an automobile, impact resistance against flying objects such as small stones is required. On the other hand, the weight increases as the thickness increases, which is not preferable. From this viewpoint, the thickness of the outer glass plate 11 is preferably 1.8 to 2.3 mm, and more preferably 1.9 to 2.1 mm. It is possible to determine the thickness to employ according to the use of the glass.

The thickness of the inner glass plate 12 can be made equal to the thickness of the outer glass plate 11, but in order to reduce the weight of the laminated glass, for example, the thickness can be made smaller than that of the outer glass plate 11. Specifically, when the strength of the glass is taken into consideration, the thickness is preferably 0.6 to 2.3 mm, more preferably 0.8 to 2.0 mm, and even more preferably 1.0 to 1.4 mm. The thickness is yet more preferably 0.8 to 1.3 mm. For the inner glass plate 12 as well, it is possible to determine the thickness to employ according to the use of the glass.

The outer glass plate 11 and the inner glass plate 12 of this embodiment have curved shapes. It is supposed that in the case of a laminated glass having a curved shape, the larger the depth of bend is, the lower the sound insulation performance is. The depth of bend is an amount indicating the bend of a laminated glass. For example, as shown in FIG. 4, when a straight line L connecting the center of an upper side and the center of a lower side of a laminated glass is set, the greatest distance between this straight line L and the laminated glass is defined as the depth of bend D.

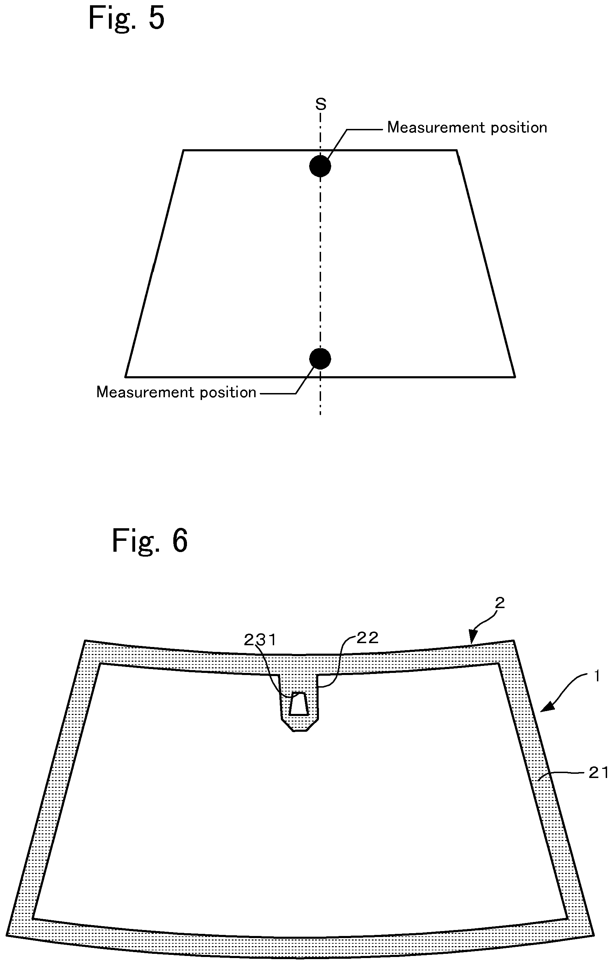

Here, an example of a method for measuring the thickness of the laminated glass 1 will be described. First, with respect to the measurement position, as shown in FIG. 5, the measurement is performed at two positions: an upper position and a lower position on a center line S extending vertically at the center of the laminated glass in the horizontal direction. Although there is no particular limitation on the measurement device, a thickness gauge such as SM-112 manufactured by TECLOCK Corporation can be used, for example. During measurement, the laminated glass is arranged such that its curved surface is placed on a flat surface, and an end portion of the laminated glass is sandwiched and measured with the above-described thickness gauge. Note that the windshield described above corresponds to a glass plate according to the present invention.

### 1-2. Interlayer

The interlayer 13 is constituted by at least one layer, and, for example, can be constituted by three layers, namely a soft core layer 131 and outer layers 132 that are harder than the core layer 131 and between which the core layer 131 is sandwiched as shown in FIG. 3. However, the interlayer is not limited to this configuration, and may be constituted by a plurality of layers including the core layer 131 and at least one outer layer 132 that is arranged on the outer glass plate 11 side. For example, the interlayer 13 may be constituted by two layers, namely the core layer 131 and one outer layer 132 arranged on the outer glass plate 11 side. Alternatively, the interlayer 13 may be configured by arranging an even number of outer layers 132 on each side of the core layer 131 so that the core layer 131 is located at the center. Alternatively, the interlayer 13 may be configured by arranging an odd number of outer layers 132 on one side of the core layer 131 and arranging an even number of outer layers 132 on the other side so that the core layer 131 is sandwiched therebetween. It should be noted that in the case where only one outer layer 132 is provided, the outer layer 132 is provided on the outer glass plate 11 side as described above, which is for the purpose of enhancing the breakage resistance performance with respect to an external force from the outside of a vehicle or a building. Moreover, when the number of outer layers 132 is increased, the sound insulation performance is improved.

There is no particular limitation on the hardness of the core layer 131 as long as the core layer 131 is softer than the outer layers 132. Although there is no particular limitation on the materials constituting the layers 131 and 132, the outer layers 132 can be made of a polyvinyl butyral resin (PVB), for example. Polyvinyl butyral resin has excellent adhesiveness to the glass plates and penetration resistance and is thus preferable. On the other hand, the core layer 131 can be made of an ethylene vinyl acetate resin (EVA) or a polyvinyl acetal resin, which is softer than the polyvinyl butyral resin included in the outer layers. When the soft core layer is sandwiched between the outer layers, the sound insulation performance can be significantly improved while maintaining the adhesiveness and the penetration resistance that are equivalent to those of a single-layered resin interlayer.

Generally, the hardness of a polyvinyl acetal resin can be controlled by adjusting (a) the degree of polymerization of a polyvinyl alcohol, which is the starting material, (b) the degree of acetalization, (c) the type of plasticizer, (d) the ratio of the plasticizer to be added, and the like. Accordingly, a hard polyvinyl butyral resin that is used for the outer layers 132 and a soft polyvinyl butyral resin that is used for the core layer 131 can be produced using the same polyvinyl butyral resin by appropriately adjusting at least one condition selected from the aforementioned conditions. Furthermore, the hardness of a polyvinyl acetal resin can also be controlled based on the type of aldehyde that is used for acetalization and whether co-acetalization using a plurality of types of aldehydes or pure acetalization using a single type of aldehyde is performed. Although not necessarily applicable to every case, the larger the number of carbon atoms of the aldehyde that is used to obtain a polyvinyl acetal resin is, the softer the resulting polyvinyl acetal resin tends to be. Accordingly, for example, if the outer layers 132 are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer 131. It should be noted that there is no limitation to the above-described resins and the like as long as predetermined Young's moduli can be obtained.

The total thickness of the interlayer 13 is not particularly specified, but is preferably 0.3 to 6.0 mm, more preferably 0.5 to 4.0 mm, and particularly preferably 0.6 to 0.2 mm. The thickness of the core layer 131 is preferably 0.1 to 2.0 mm and more preferably 0.1 to 0.6 mm. The thickness of each outer layer 132 is preferably 0.1 to 2.0 mm and more preferably 0.1 to 1.0 mm. It is also possible to fix the total thickness of the interlayer 13 and adjust the thickness of the core layer 131 within the fixed total thickness.

The thicknesses of the core layer 131 and the outer layer 132 can be measured as described below, for example. First, a cross section of the laminated glass is enlarged by a factor of 175 and displayed using a microscope (e.g., VH-5500 manufactured by Keyence Corporation). Then, the thicknesses of the core layer 131 and the outer layer 132 are visually identified and measured. At this time, in order to eliminate variations seen in visual identification, the measurement is performed five times, and an average value is taken as the thickness of the core layer 131 or the outer layer 132.

It should be noted that the thicknesses of the core layer 131 and the outer layer 132 of the interlayer 13 are not required to be constant over the entire surface. For example, the core layer 131 and the outer layer 132 can also have a wedge shape suited to a laminated glass that is used for a head-up display. In this case, the thicknesses of the core layer 131 and the outer layer 132 of the interlayer 13 are measured at a position with the smallest thicknesses, that is, in the lowest side portion of the laminated glass. If the interlayer 13 has a wedge shape, the outer glass plate and the inner glass plate are not arranged in parallel, but it should be construed that such an arrangement is also included in the glass plate in the present invention. That is, the present invention includes the arrangement of the outer glass plate and the inner glass plate when the interlayer 13 that includes the core layer 131 and the outer layer 132 whose thicknesses increase at a rate of change of 3 mm or less per meter, for example.

Although there is no particular limitation on the method for manufacturing the interlayer 13, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated using a pressing process, a lamination process, or the like. In the method for laminating using the pressing process, the lamination process, or the like, each of the resin films before laminating may have a single-layer structure or a multilayer structure. The interlayer 13 may be constituted by a single layer rather than the plurality of layers described above.

### 1-3. Infrared transmittance of laminated glass

As described above, the windshield according to this embodiment is used in a front safety system of automobiles that uses a measurement unit such as a laser radar or a camera. In such safety systems, infrared rays are emitted toward a preceding vehicle to measure the speed of the preceding automobile and the distance to the preceding automobile. Therefore, infrared transmittance in a predetermined range is required to be achieved in the laminated glass.

When a regular sensor is used in a laser radar, for example, a useful transmittance with respect to light (infrared rays) having a wavelength of 850 to 950 nm is 20% or more and 80% or less, and at least 20% or more and 60% or less. The transmittance is measured in accordance with JIS R3106, using UV3100 (manufactured by Shimadzu Corporation) as a measurement device. Specifically, a transmittance with respect to unidirectional light that is emitted at a right angle to the surface of the laminated glass is measured.

Some safety systems as described above do not use a laser radar but instead uses an infrared camera to measure the speed of a preceding vehicle and the distance to the preceding vehicle. In such a case, when a regular camera is used in a laser radar, for example, a useful transmittance with respect to light (infrared rays) having a wavelength of 700 to 800 nm is 30% or more and 80% or less, and preferably 40% or more and 60% or less. The transmittance is measured in accordance with ISO9050.

### 2. Mask layer

Next, the mask layer 2 will be described. The mask layer 2 as shown in FIGS. 6 to 8 is formed on the laminated glass 1 according to this embodiment. The mask layer 2 is layered on the laminated glass 1, but there is no particular limitation on the position of the mask layer 2, and the mask layer 2 can be layered on at least one of a vehicle interior side surface of the outer glass plate 11, a vehicle exterior side surface of the inner glass plate 12, and a vehicle interior side surface of the inner glass plate 12. Out of the above-described configurations, it is preferable to employ a configuration in which mask layers 2 having substantially the same shape as each other are formed on both the vehicle interior side surface of the outer glass plate 11 and the vehicle interior side surface of the inner glass plate 12, because curves of the glass plates 11 and 12 match at positions where the mask layers 2 are formed. Note that FIG. 1 shows an example in which the mask layer 2 is formed on the vehicle interior side surface of the inner glass plate 12.

This mask layer 2 is a region of a dark color provided for concealment from the outside and to which an adhesive is applied when the laminated glass 1 is attached to a vehicle body, for example. As shown in FIG. 6, the mask layer 2 includes a peripheral mask layer 21 that is formed on an outer periphery of the laminated glass 1 and a center mask layer 22 that extends downward from a portion of the peripheral mask layer 21 located at the center of an upper edge of the laminated glass 1. The above-described measurement unit 4 is attached to the center mask layer 22. The measurement unit 4 is arranged such that light emitted from a sensor 5 passes through the opening (information acquisition region) 231 as described later and the measurement unit can receive light reflected off a preceding vehicle or an obstacle. The mask layer 2 can be formed using various materials, and there is no particular limitation on the material of the mask layer as long as the material can block the view from the outside of the vehicle. For example, the mask layer 2 can be formed by applying ceramic of a dark color such as black onto the laminated glass 1.

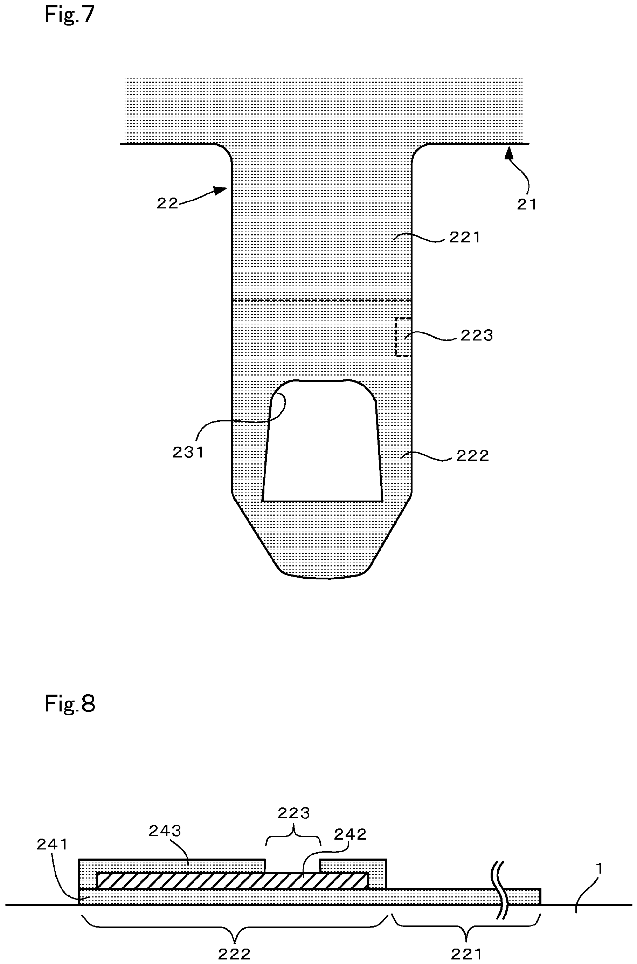

Next, the center mask layer 22 will be described. As shown in FIG. 7, the center mask layer 22 has a rectangular shape extending in the vertical direction, and the rectangular opening 231 is formed in the center mask layer 22.

The center mask layer 22 is divided into three regions, namely an upper region 221 that is located on the upper side of the opening 231, a lower region 222 that is located below the upper region 221 and includes the opening 231, and a lateral region 223 that is a small rectangular region formed in a lateral portion of the lower region 222.

Next, the layer structure of each region will be described. As shown in FIG. 8, the upper region 221 is constituted by a single layer, namely a first ceramic layer 241 formed of black ceramic. The lower region 222 is constituted by three layers, namely the first ceramic layer 241, a sliver layer 242, and a second ceramic layer 243 that are layered in this order on the inner surface of the laminated glass 1. The silver layer 242 is formed of silver and the second ceramic layer 243 is formed of the same material as the first ceramic layer 241. The lateral region 223 is constituted by two layers, namely the first ceramic layer 241 and the silver layer 242 that are layered in this order on the inner surface of the laminated glass 1, and the silver layer 242 is exposed on the vehicle interior side in the lateral region. The lowermost first ceramic layer 241 is shared by all the regions, and the second silver layer 242 is shared by the lower region 222 and the lateral region 223. Note that the ceramic layers 241 and 243 each have a thickness of 10 to 20 µm, for example, to ensure light blocking properties. In a case where the center mask layer 22 is formed on the vehicle interior side surface of the inner glass plate 12, a bracket of the measurement unit 4 is bonded to the center mask layer 22 with an adhesive, and therefore such a thickness is also preferable to ensure adhesiveness. This is because there is a risk that a urethane-silicone-based adhesive may deteriorate due to ultraviolet rays or the like, for example.

The peripheral mask layer 21 and the center mask layer 22 can be formed as described below, for example. First, the first ceramic layer 241 is applied onto either of the glass plates of the laminated glass 1. The first ceramic layer 241 is shared by the peripheral mask layer 21. Next, the silver layer 242 is applied onto regions of the first ceramic layer 241 corresponding to the lower region 222 and the lateral region 223. Lastly, the second ceramic layer 243 is applied onto a region corresponding to the lower region 222. Note that the region where the silver layer 242 is formed in the lower region 222 corresponds to the position where a sensor of the measurement unit 4, which will be described later, is arranged. A portion of the silver layer 242 that is exposed in the lateral region 223 is provided with wiring for grounding. Although the ceramic layers 241 and 243 and the silver layer 242 can be formed using a screen printing process, these layers can alternatively be produced by transferring a transfer film for firing to the glass plate and firing it.

Although the ceramic layers 241 and 243 can be formed using various materials, these layers have the following composition, for example.

**Table 1**

| | | Ceramic paste |
|---|---|---|
| Pigment *1 | mass% | 10% |
| Resin (cellulose resin) | mass% | 5% |
| Organic solvent (pine oil) | mass% | 15% |
| Glass binder *2 | mass% | 70% |
| Viscosity | dPs | 150 |

| | | |
|---|---|---|
| *1 Main components: copper oxide, chromium oxide, iron oxide, and manganese oxide *2: Main components: bismuth borosilicate, zinc borosilicate | | |

Although there is no particular limitation on the composition of the silver layer 242, the silver layer has the following composition, for example.

**Table 2**

| | | Conductive ceramic paste |
|---|---|---|
| Silver particles (average particle diameter: 10µm) | mass% | 70 |
| Glass binder *1 | mass% | 10 |
| Resin (cellulose resin) | mass% | 5 |
| Organic medium (terpineol) | mass% | 15 |
| Viscosity | dPs | 180 |

| | | |
|---|---|---|
| *1: Main components: bismuth borosilicate, zinc borosilicate | | |

The ceramic layers and the silver layer can be formed by performing screen printing under the conditions that a polyester screen of 355 mesh is used, the coating thickness is 20 µm, the tension is 20 Nm, the squeegee hardness is 80 degrees, the attachment angle is 75°, and the printing speed is 300 mm/s, and performing drying in a drying furnace at 150°C for 10 minutes, for example. It should be noted that, when the first ceramic layer 241, the silver layer 242, and the second ceramic layer 243 are layered in this order, the above-described screen printing and drying are repeated.

Note that there is no particular limitation on the configuration of the center mask layer 22, and it is not necessary to cover the entire periphery of the opening 231 with the center mask layer 22. For example, the lower edge side of the opening 231 may be cut off such that the opening 231 is open downward. Also, there is no particular limitation on the number of openings 231, and the number can be appropriately determined according to the type of the measurement unit 4 to be attached, for example.

### 3. Antifog laminate

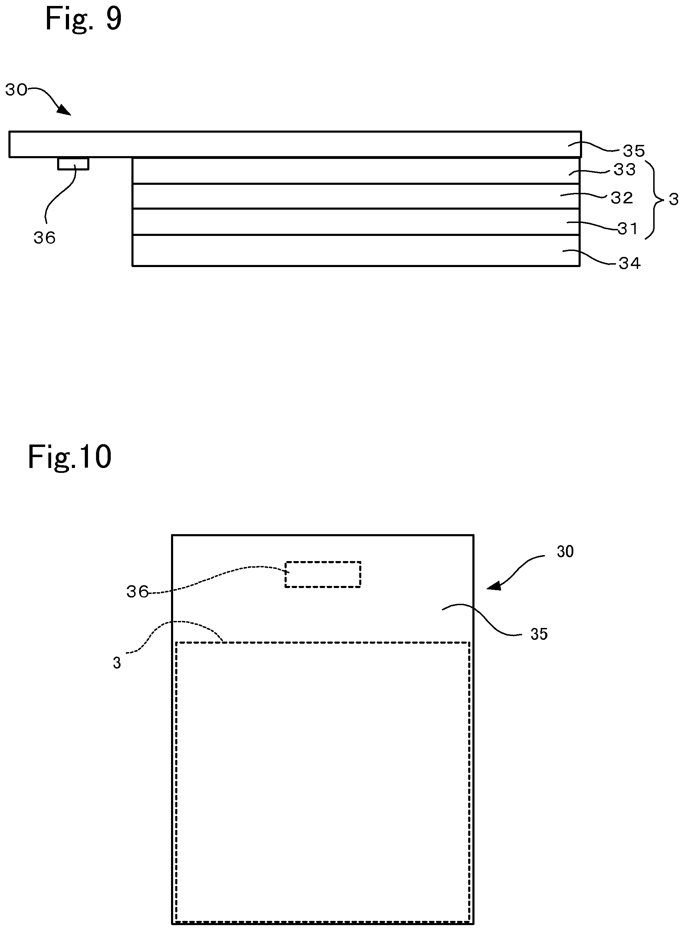

The following describes an antifog sheet and an antifog laminate including the antifog sheet with reference to FIGS. 9 and 10. FIG. 9 is a cross-sectional view of the antifog laminate and FIG. 10 is a plan view of the antifog laminate. An antifog sheet 3 is to be attached to the opening 231, and includes a sticky layer 31, a substrate film 32, and an antifog layer 33 that are rectangular in shape and are layered in this order as shown in FIG. 9. A removable first protective sheet 34 is attached to the sticky layer 31 until the antifog sheet is to be fixed to the opening 231. The first protective sheet 34 has the same size as the sticky layer 31. On the other hand, a removable second protective sheet 35 is attached to the antifog layer 33, but the second protective sheet 35, which has a rectangular shape, is larger than the antifog layer 33. However, the second protective sheet 35 is smaller than an attachment opening 701 of a bracket 700, which will be described later. Further, on a surface of the second protective sheet 35 to which the antifog sheet 3 is attached, a temporal fixing member 36 is attached adjacent to the antifog sheet 3. In the following description, the five layer structure including the protective sheets 34 and 35 and the temporal fixing member 36 that are attached to the antifog sheet 3 will be referred to as an antifog laminate 30.

Although the antifog sheet 3 has a shape corresponding to the opening 231, the antifog sheet 3 may be slightly smaller than the opening 231, for example. Alternatively, the antifog sheet 3 may be larger than the opening 231 and extend past the opening 231 to cover part of the mask layer 2. The following describes the respective layers.

### 3-1. Antifog layer

There is no particular limitation on the antifog layer 33 as long as it has an effect of preventing fogging of the laminated glass 1, and a known layer can be used as the antifog layer. In general, the types of the antifog layer 33 include a hydrophilic type that turns water generated from water vapor into a water layer on its surface, a water absorbent type that absorbs water vapor, a water repellent absorbent type that suppresses condensation of water vapor into waterdrops on its surface, and a water repellent type that repels waterdrops produced by water vapor. All these types can be used as the antifog layer 33. The following describes one example of the antifog layer.

The antifog layer 33 can be configured to include a water repellent group and a metallic oxide component, and to preferably further include a water absorbent resin. The antifog layer 33 may further include other functional components as needed. There is no limitation on the type of water absorbent resin as long as the water absorbent resin can absorb and hold water. The antifog layer can be supplied with a water repellent group using a metallic compound containing a water repellent group (water repellent group-containing metallic compound) . The antifog layer can be supplied with a metallic oxide component using the water repellent group-containing metallic compound, a metallic compound other than the water repellent group-containing metallic compound, minute particles of a metallic oxide, or the like. The following describes respective components.

### Water absorbent resin

First, the water absorbent resin will be described. The water absorbent resin is, for example, at least one type of resin selected from the group consisting of urethane resin, epoxy resin, acrylic resin, polyvinyl acetal resin, and polyvinylalcohol resin. An example of the urethane resin is polyurethane resin constituted by polyisocyanate and polyol. Acrylic polyol and polyoxyalkylene-based polyol are preferable as the polyol. Examples of the epoxy resin include glycidyl ether-based epoxy resin, glycidyl ester-based epoxy resin, glycidyl amine-based epoxy resin, and cyclic aliphatic epoxy resin. The cyclic aliphatic epoxy resin is preferable. The following describes the polyvinyl acetal resin (referred to merely as "polyvinyl acetal" hereinafter), which is a preferable water absorbent resin.

Polyvinyl acetal can be obtained by acetalizing an aldehyde with polyvinyl alcohol through a condensation reaction. The acetalization using polyvinyl alcohol is performed using a known method such as a precipitation method in which an aqueous medium is used in the presence of an acid catalyst, or a dissolution method in which a solvent such as alcohol is used. The acetalization can be performed in parallel with the saponification of polyvinyl acetate. The degree of acetalization is preferably 2 to 40 mol%, more preferably 3 to 30 mol%, and even more preferably 5 to 20 mol%, and optionally 5 to 15 mol%. The degree of acetalization can be measured based on 13C nuclear magnetic resonance spectroscopy, for example. Polyvinyl acetal whose degree of acetalization is within the above-described range is suitable for forming an antifog layer having favorable water absorbing properties and water resistance.

The average degree of polymerization of the polyvinyl alcohol is preferably 200 to 4500, and more preferably 500 to 4500. A high average degree of polymerization is advantageous in the formation of an antifog layer having favorable water absorbing properties and water resistance, but if the average degree of polymerization is excessively high, the viscosity of the solution will become excessively high, and formation of the layer may be negatively affected. A favorable degree of saponification of the polyvinyl alcohol is 75 to 99.8 mol%.

Examples of the aldehyde to be condensed with polyvinyl alcohol through a condensation reaction include aliphatic aldehydes such as formaldehyde, acetaldehyde, butyraldehyde, hexylcarbaldehyde, octylcarbaldehyde, and decylcarbaldehyde. Examples thereof also include aromatic aldehydes including benzaldehyde; benzaldehyde subjected to substitution using an alkyl group such as 2-methylbenzaldehyde, 3-methylbenzaldehyde, 4-methylbenzaldehyde, or the like; benzaldehyde subjected to substitution using a halogen atom such as chlorobenzaldehyde or the like; substituted benzaldehyde in which a hydrogen atom is substituted with a functional group such as a hydroxy group, an alkoxy group, an amino group, or a cyano group, other than alkyl groups; and condensed aromatic aldehyde such as naphthaldehyde or anthraldehyde. Aromatic aldehydes, which are highly hydrophobic, are advantageous in the formation of an antifog layer with a low degree of acetalization and excellent water resistance. Use of aromatic aldehydes is also advantageous in that a layer having high water absorbency is formed while a large number of hydroxy groups are caused to remain. It is preferable that the polyvinyl acetal has an acetal structure derived from an aromatic aldehyde, particularly benzaldehyde.

The content of the water absorbent resin in the antifog layer is preferably 50 mass% or more, more preferably 60 mass% or more, and even more preferably 65 mass% or more, and preferably 95 mass% or less, more preferably 90 mass% or less, and even more preferably 85 mass% or less, from the viewpoint of layer hardness, water absorbing properties, and antifog properties.

### Water repellent group

Next, the water repellent group will be described. The water repellent group facilitates the realization of both strength and antifog properties of the antifog layer, and contributes to ensuring the straightness of incident light even if waterdrops are formed due to the hydrophobic surface of the antifog layer. It is preferable to use a water repellent group, which has high water repellency, in order to sufficiently obtain the effect of the water repellent group. Preferably, the water repellent group is at least one type of water repellent group selected from (1) chain or cyclic alkyl groups having 3 to 30 carbon atoms and (2) chain or cyclic alkyl groups having 1 to 30 carbon atoms in which at least a portion of hydrogen atoms are substituted with a fluorine atom (also referred to as "fluorine-substituted alkyl groups" hereinafter).

The chain or cyclic alkyl groups in (1) and (2) are preferably chain alkyl groups. The chain alkyl groups may be branched alkyl groups, but are preferably linear alkyl groups. Alkyl groups having more than 30 carbon atoms may make the antifog layer opaque. The number of carbon atoms in the chain alkyl groups is preferably 20 or less from the viewpoint of the balance between the antifog properties, strength, and external appearance of the layer. The chain alkyl groups have 1 to 8 or 4 to 16 carbon atoms, for example, and have preferably 4 to 8 carbon atoms. Particularly preferable alkyl groups are linear alkyl groups having 4 to 8 carbon atoms such as an n-pentyl group, an n-hexyl group, an n-heptyl group, and an n-octyl group. The fluorine-substituted alkyl groups in (2) may be groups obtained by substituting only a portion of hydrogen atoms of a chain or cyclic alkyl group with a fluorine atom, or groups obtained by substituting all of hydrogen atoms of a chain or cyclic alkyl group with a fluorine atom, such as linear perfluoroalkyl groups. The fluorine-substituted alkyl groups have high water repellency, and therefore, the effects can be sufficiently obtained by adding a small amount thereof. It should be noted that, when the content of the fluorine-substituted alkyl groups is excessively large, a component containing the fluorine-substituted alkyl groups may be separated from the other components in a coating solution for forming a layer.

### Hydrolyzable metallic compound containing water repellent group

In order to blend the water repellent group into the antifog layer, a metallic compound containing a water repellent group (water repellent group-containing metallic compound), particularly a metallic compound containing a water repellent group and a hydrolyzable functional group or a halogen atom (water repellent group-containing hydrolyzable metallic compound), or a hydrolysate thereof is added to a coating solution for forming the layer. In other words, the water repellent group may be derived from the water repellent group-containing hydrolyzable metallic compound. A water repellent group-containing hydrolyzable silicon compound represented by Formula (I) below is preferably used as the water repellent group-containing hydrolyzable metallic compound.

RₘSiY₄₋ₘ (I)

Here, R represents a water repellent group, that is, a chain or cyclic alkyl group having 1 to 30 carbon atoms in which at least a portion of hydrogen atoms are optionally substituted with a fluorine atom, Y represents a hydrolyzable functional group or a halogen atom, and m represents an integer of 1 to 3. The hydrolyzable functional group is at least one type selected from an alkoxyl group, an acetoxy group, an alkenyloxy group, and an amino group, and preferably an alkoxy group, particularly an alkoxy group having 1 to 4 carbon atoms. An example of the alkenyloxy group is an isopropenoxy group. The halogen atom is preferably a chlorine atom. It should be noted that the functional groups shown here as examples can also be used as "hydrolyzable functional groups" described herein after. m is preferably 1 or 2.

When the progress of hydrolysis and polycondensation is completed, the compound represented by Formula (I) supplies a component represented by Formula (II) below.

RₘSiO(₄₋ₘ)_{/2} (II)

Here, R and m are as described above. In practice, after the hydrolysis and polycondensation have been performed, the compounds represented by Formula (II) form a network structure in which silicon atoms are linked to one another via oxygen atoms, in the antifog layer.

As described above, the compounds represented by Formula (I) are hydrolyzed or partially hydrolyzed, and at least portions thereof are polycondensed. Thus, a network structure including siloxane bonds (Si-O-Si) is formed in which silicon atoms and oxygen atoms are alternately linked and that spreads three-dimensionally. A water repellent group R is linked to the silicon atom contained in this network structure. In other words, the water repellent group R is immobilized in the network structure including siloxane bonds via an R-Si bond. This structure is advantageous in uniform dispersion of the water repellent groups R in the layer. The network structure may contain silica components supplied from silicon compounds (e.g., tetraalkoxysilane and silane coupling agents) other than the water repellent group-containing hydrolyzable silicon compound represented by Formula (I). If a silicon compound that does not contain a water repellent group and contains a hydrolyzable functional group or halogen atom (water repellent group-free hydrolyzable silicon compound) is blended together with the water repellent group-containing hydrolyzable silicon compound into a coating solution for forming an antifog layer, a network structure including siloxane bonds containing silicon atoms that are linked to water repellent groups and silicon atoms that are not linked to water repellent groups can be formed. With such a structure, it is easy to independently adjust the content of the water repellent group and the content of the metallic oxide component in the antifog layer.

When the antifog layer contains a water absorbent resin, the water vapor permeability of the surface of the antifog layer containing the water absorbent resin is enhanced due to the water repellent groups, and the antifog performance is thus enhanced. The two functions, namely the water absorbent function and the water repellent function, are contrary to each other, and therefore, conventionally, a water absorbent material and a water repellent material are distributed in separate layers. However, the maldistribution of water near the surface of the antifog layer is resolved due to the water repellent groups contained in the antifog layer, so that the time it takes until dew condenses is prolonged, and the antifog properties of the antifog layer are thus enhanced. The following is a description of the effects.

Water vapor that has infiltrated the antifog layer containing the water absorbent resin forms hydrogen bonds with hydroxy groups in the water absorbent resin and the like, and is retained in the form of bound water. As the amount of water vapor increases, the form of water vapor changes from bound water to semibound water, and finally, water vapor is retained in the form of free water retained in voids in the antifog layer. The water repellent groups prevent the formation of hydrogen bonds and facilitate the dissociation of formed hydrogen bonds in the antifog layer. If the content of the water absorbent resin is the same, the number of hydroxy groups capable of forming a hydrogen bond in the layer is the same, but the speed of hydrogen bond formation is reduced due to the water repellent groups. Therefore, if the antifog layer containing the water repellent groups is used, moisture will ultimately be retained in any of the above-described forms in the antifog layer, but water vapor can diffuse to the bottom portion of the layer as is until it is retained therein. Moreover, water that is once retained dissociates relatively easily and is likely to move to the bottom portion of the layer in the form of water vapor. As a result, the distribution of the retention amount of moisture in the thickness direction of the layer is relatively uniform between the vicinity of the surface and the bottom portion of the layer. That is, the entirety in the thickness direction of the antifog layer can be effectively used to absorb water supplied to the surface of the antifog layer, and therefore, waterdrops are less likely to be formed through condensation, thus resulting in enhancement of the antifog properties.

On the other hand, with a conventional antifog layer that does not contain the water repellent groups, water vapor that has infiltrated the antifog layer is retained significantly easily in the form of bound water, semibound water, or free water. Therefore, water vapor that has infiltrated the antifog layer tends to be retained in the vicinity of the surface of the antifog layer. As a result, in the antifog layer, the amount of moisture is extremely large in the vicinity of the surface, and rapidly decreases toward the bottom portion of the antifog layer. That is, although the bottom portion of the antifog layer can further absorb water, moisture saturates in the vicinity of the surface of the antifog layer and condenses into waterdrops, and therefore, the antifog properties are limited.

When the water repellent groups are introduced into the antifog layer using the water repellent group-containing hydrolyzable silicon compound (see Formula (I)), a network structure including stable siloxane bonds (Si-O-Si) is formed. The formation of this network structure is advantageous from the viewpoint that not only abrasion resistance but also hardness, water resistance, and the like are enhanced.

It is sufficient that the water repellent groups are added in amounts at which the contact angle of water on the surface of the antifog layer is 70° or more, preferably 80° or more, and even more preferably 90° or more. A measurement value obtained by dropping a 4 mg drop of water onto the surface of the antifog layer is taken as the contact angle of water. In particular, when a methyl group or ethyl group, which has slightly low water repellency, is used as the water repellent group, it is preferable to blend, into the antifog layer, the water repellent groups in amounts at which the contact angle of water is within the above-described range. The upper limit of the contact angle of water is not particularly limited, but is 150° or less, 120° or less, or 105° or less, for example. It is preferable that the water repellent groups are uniformly contained in the antifog layer such that the contact angle of water is within the above-described range over the entire region of the surface of the antifog layer.

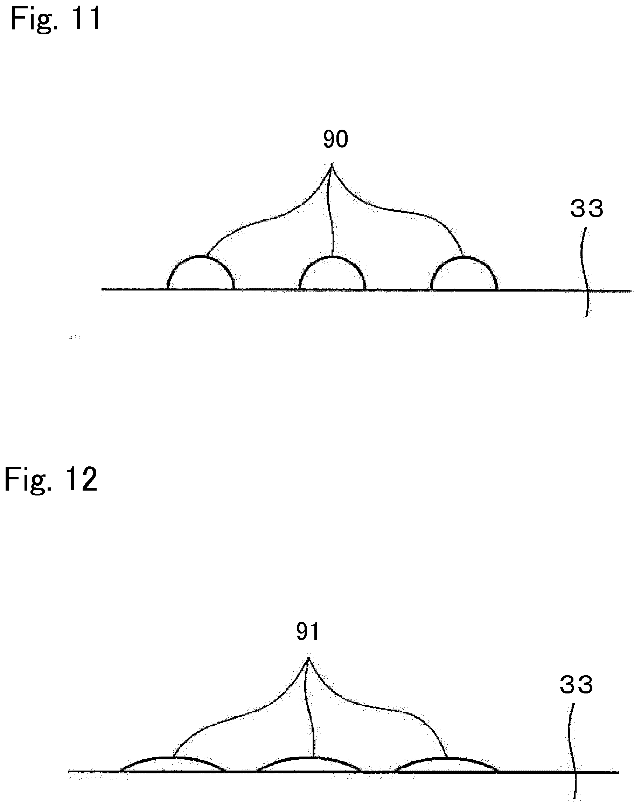

Here, the relationship between the contact angle of water and the antifog layer 33 will be described with reference to FIGS. 11 and 12. FIGS. 11 and 12 show states in which waterdrops (90, 91) that differ in contact angle are attached to the antifog layer 33. As shown in FIGS. 10 and 11, the areas of the antifog layer 33 covered with the waterdrops (90, 91) formed on the surface of the antifog layer 33 through condensation of the same amount of water vapor tend to decrease as the contact angle of water on the surface increases. The smaller the areas of the antifog layer 33 covered with the waterdrops (90, 91) are, the smaller the ratio of the areas in which light entering the antifog layer 33 diffuses is. Therefore, the antifog layer 33 in which the contact angle of water increases due to the presence of the water repellent groups is advantageous in that the straightness of transmitted light is maintained in a state in which waterdrops are formed on the surface of the antifog layer 33.

It is preferable that the antifog layer 33 contains the water repellent groups such that the contact angle of water is within the above-described preferable range. When the water absorbent resin is contained, it is preferable that the antifog layer contains the water repellent groups such that the amount of water repellent groups is within a range of 0.05 parts by mass or more, preferably within a range of 0.1 parts by mass or more, and more preferably within a range of 0.3 parts by mass or more, and within a range of 10 parts by mass or less and preferably within a range of 5 parts by mass or less, with respect to 100 parts by mass of the water absorbent resin.

### Metallic oxide component

Next, the metallic oxide component will be described. The metallic oxide component is a component including an oxide of at least one type of element selected from Si, Ti, Zr, Ta, Nb, Nd, La, Ce, and Sn, for example, and is preferably a component including an oxide of Si (silica component). When the water absorbent resin is contained, it is preferable that the antifog layer contains the metallic oxide component such that the amount of the metallic oxide component is 0.01 parts by mass or more, preferably 0.1 parts by mass or more, more preferably 0.2 parts by mass or more, even more preferably 1 part by mass or more, even more preferably 5 parts by mass or more, optionally 7 parts by mass or more, and 10 parts by mass or more if necessary, with respect to 100 parts by mass of the water absorbent resin, and 60 parts by mass or less, particularly 50 parts by mass or less, preferably 40 parts by mass or less, more preferably 30 parts by mass or less, even more preferably 20 parts by mass or less, and optionally 18 parts by mass or less. The metallic oxide component is necessary for ensuring the strength of the antifog layer, particularly scratch resistance, but if the content of the metallic oxide component is excessively large, the antifog properties of the antifog layer are impaired.

At least a portion of the metallic oxide component may be derived from a hydrolyzable metallic compound or a hydrolysate thereof added to a coating solution for forming an antifog layer. Here, the hydrolyzable metallic compound is at least one selected from a) a metallic compound (water repellent group-containing hydrolyzable metallic compound) containing a water repellent group and a hydrolyzable functional group or a halogen atom, and b) a metallic compound that does not contain a water repellent group and contains a hydrolyzable functional group or halogen atom (water repellent group-free hydrolyzable metallic compound). The metallic oxide component derived from the compounds of a) and/or b) is an oxide of the metallic atoms included in the hydrolyzable metallic compound. The metallic oxide component may include a metallic oxide component derived from minute particles of a metallic oxide added to a coating solution for forming an antifog layer, and a metallic oxide component derived from a hydrolyzable metallic compound or a hydrolysate thereof added to the coating solution. Also here, the hydrolyzable metallic compound is at least one compound selected from the compounds of a) and b) above. The compound of b) above, namely the hydrolyzable metallic compound containing no water repellent groups, may include at least one of tetraalkoxysilane and a silane coupling agent. Hereinafter, excluding the compound of a) above, which has been already described, the minute particles of a metallic oxide and the compound of b) above will be described.

### Minute particles of metallic oxide

The antifog layer 33 may further contain minute particles of a metallic oxide as at least a portion of the metallic oxide component. The metallic oxide constituting the minute particles of a metallic oxide is an oxide of at least one type of element selected from Si, Ti, Zr, Ta, Nb, Nd, La, Ce, and Sn, for example, with minute particles of silica being preferable. The minute particles of silica can be introduced into the layer by adding colloidal silica thereto, for example. The minute particles of a metallic oxide excel at transmitting stress applied to the antifog layer to a transparent article that supports the antifog layer, and also have a high hardness. Therefore, the addition of the minute particles of a metallic oxide is advantageous from the viewpoint of enhancing the abrasion resistance and scratch resistance of the antifog layer. Moreover, when the minute particles of a metallic oxide are added to the antifog layer, minute voids are formed in portions where the minute particles are in contact with one another or close to one another, and water vapor is likely to become trapped in the antifog layer through these voids. Accordingly, the addition of the minute particles of a metallic oxide may advantageously act to enhance the antifog properties. Minute particles of a metallic oxide that have been formed in advance are added to a coating solution for forming an antifog layer, and the minute particles of a metallic oxide can thus be supplied to the antifog layer.

When the average particle diameter of the minute particles of a metallic oxide is excessively large, the antifog layer may be opaque, whereas when the average particle diameter of the minute particles of a metallic oxide is excessively small, the minute particles aggregate, thus making it difficult to uniformly disperse the minute particles. From this viewpoint, the average particle diameter of the minute particles of a metallic oxide is preferably 1 to 20 nm, and particularly preferably 5 to 20 nm. It should be noted that the average particle diameter of the minute particles of a metallic oxide in the form of primary particles is taken as the average particle diameter of the minute particles of a metallic oxide described herein. The average particle diameter of the minute particles of a metallic oxide is determined by measuring, through observation using a scanning electron microscope, the particle diameters of fifty randomly selected minute particles and employing the average value thereof. If the content of the minute particles of a metallic oxide is excessively large, there is a risk that the amount of water absorption will decrease in the entire layer, and thus the layer becomes opaque. When the antifog layer contains the water absorbent resin, it is preferable to add the minute particles of a metallic oxide such that the amount thereof is 0 to 50 parts by mass, preferably 1 to 30 parts by mass, more preferably 2 to 30 parts by mass, even more preferably 5 to 25 parts by mass, and optionally 10 to 20 parts by mass, with respect to 100 parts by mass of the water absorbent resin.

### Hydrolyzable metallic compound containing no water repellent groups

In addition, the antifog layer 33 may contain a metallic oxide component derived from a hydrolyzable metallic compound that does not contain a water repellent group (water repellent group-free hydrolyzable compound). A preferable water repellent group-free hydrolyzable metallic compound is a hydrolyzable silicon compound that does not contain a water repellent group. The hydrolyzable silicon compound that does not contain a water repellent group is at least one type of silicon compound (it should be noted that a water repellent group is not contained) selected from silicon alkoxide, chlorosilane, acetoxysilane, alkenyloxysilane, and aminosilne, with silicon alkoxide that does not contain a water repellent group being preferable. It should be noted that an example of the alkenyloxysilane is isopropenoxysilane.

The hydrolyzable silicon compound that does not contain a water repellent group may be a compound represented by Formula (III) below.

SiY₄ (III)

As described above, Y represents a hydrolyzable functional group, and is preferably at least one selected from an alkoxyl group, an acetoxy group, an alkenyloxy group, an amino group, and a halogen atom.

The water repellent group-free hydrolyzable metallic compounds are hydrolyzed or partially hydrolyzed, and at least portions thereof are polycondensed. Thus, a metallic oxide component in which metallic atoms and oxygen atoms are linked is supplied. This component firmly joins the minute particles of a metallic oxide and the water absorbent resin, and may contribute to the enhancement of the abrasion resistance, hardness, water resistance, and the like of the antifog layer. When the antifog layer contains the water absorbent resin, it is preferable to set the amount of the metallic oxide component derived from the hydrolyzable metallic compound that does not contain a water repellent group to be within a range of 0 to 40 parts by mass, preferably 0.1 to 30 parts by mass, more preferably 1 to 20 parts by mass, even more preferably 3 to 10 parts by mass, and optionally 4 to 12 parts by mass, with respect to 100 parts by mass of the water absorbent resin.

A preferable example of the hydrolyzable silicon compound that does not contain a water repellent group is tetraalkoxysilane, and more specifically, tetraalkoxysilane containing an alkoxy group having 1 to 4 carbon atoms. The tetraalkoxysilane is at least one selected from tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane, for example.

If the content of the metallic oxide (silica) component derived from tetraalkoxysilane is excessively large, the antifog properties of the antifog layer may be impaired. One reason for this is that the flexibility of the antifog layer is impaired, and thus the swelling and shrinkage of the antifog layer caused by the absorption and discharge of moisture are limited. When the antifog layer contains the water absorbent resin, it is preferable to add the metallic oxide component derived from tetraalkoxysilane such that the amount thereof is within a range of 0 to 30 parts by mass, preferably 1 to 20 parts by mass, and more preferably 3 to 10 parts by mass, with respect to 100 parts by mass of the water absorbent resin.

Another preferable example of the hydrolyzable silicon compound that does not contain a water repellent group is a silane coupling agent. The silane coupling agent is a silicon compound containing active functional groups that are different from each other. It is preferable that a portion of the active functional groups are hydrolyzable functional groups. An example of the silane coupling agent is a silicon compound containing an epoxy group and/or an amino group and a hydrolyzable functional group. Preferable examples of the silane coupling agent include glycidyloxyalkyltrialkoxysilane and aminoalkyltrialkoxysilane. It is preferable that, in these silane coupling agents, an alkylene group that is directly linked to a silicon atom has 1 to 3 carbon atoms. Since a glycidyloxyalkyl group and an aminoalkyl group contain a hydrophilic functional group (epoxy group, amino group), they are not water-repellent as a whole even though they contain an alkylene group.

The silane coupling agent firmly couples the water absorbent resin, which is an organic component, and the minute particles of a metallic oxide and the like, which are inorganic components, and may contribute to the enhancement of the abrasion resistance, hardness, water resistance, and the like of the antifog layer. However, when the content of the metallic oxide (silica) component derived from the silane coupling agent is excessively large, the antifog properties of the antifog layer are impaired, and the antifog layer may become opaque in some cases. When the antifog layer contains the water absorbent resin, it is preferable to add the metallic oxide component derived from the silane coupling agent such that the amount thereof is within a range of 0 to 10 parts by mass, preferably 0.05 to 5 parts by mass, and more preferably 0.1 to 2 parts by mass, with respect to 100 parts by mass of the water absorbent resin.

### Cross-linked structure

In addition, the antifog layer 33 may also include a cross-linked structure formed using a cross-linking agent, preferably at least one type of cross-linking agent selected from an organic boron compound, an organic titanium compound, and an organic zirconium compound. The introduction of the cross-linked structure enhances the abrasion resistance, scratch resistance, and water resistance of the antifog layer. From another viewpoint, the introduction of the cross-linked structure facilitates the improvement of the durability of the antifog layer without impairing the antifog performance.

When the cross-linked structure formed using a cross-linking agent is introduced into the antifog layer in which the metallic oxide component is a silica component, the antifog layer may contain a metallic atom other than silicon, preferably boron, titanium, or zirconium, in addition to silicon, as metallic atoms.

There is no particular limitation on the type of cross-linking agent as long as the used water absorbent resin can be cross-linked. Here, only examples of the organic titanium compound will be listed. The organic titanium compound is at least one selected from a titanium alkoxide, a titanium chelate-based compound, and titanium acylate, for example. Examples of the titanium alkoxide include titanium tetraisopropoxide, titanium tetra-n-butoxide, and titanium tetraoctoxide. Examples of the titanium chelate-based compound include titanium acetylacetonate, titanium ethyl acetoacetate, titanium octyleneglycol, titanium triethanolamine, and titanium lactate. The titanium lactate may be an ammonium salt thereof (titanium lactate ammonium). An example of the titanium acylate is titanium stearate. A preferable organic titanium compound is a titanium chelate-based compound, particularly titanium lactate.

When the water absorbent resin is polyvinyl acetal, a preferable cross-linking agent is an organic titanium compound, particularly titanium lactate.

### Other optional components

Other additives may also be blended into the antifog layer 33. Examples of the additives include glycols such as glycerin and ethylene glycol that have the function of improving the antifog properties. A surfactant, a leveling agent, an ultraviolet absorbing agent, a coloring agent, an antifoaming agent, an antiseptic agent, and the like may be used as the additives.

### Thickness

The thickness of the antifog layer 33 is appropriately adjusted according to required antifog characteristics or the like. The thickness of the antifog layer 33 is preferably 1 to 20 µm, more preferably 2 to 15 µm, and even more preferably 3 to 10 µm.

As is clear from the description above, a preferable embodiment of the antifog layer 33 has a configuration as described below. That is, it is preferable that the antifog layer 33 contains 0.1 to 60 parts by mass of the metallic oxide component and 0.05 to 10 parts by mass of the water repellent groups, with respect to 100 parts by mass of the water absorbent resin. At this time, the water repellent groups may be chain alkyl groups having 1 to 8 carbon atoms and be directly linked to metallic atoms included in the metallic oxide component, and the metallic atoms may be silicon atoms. Moreover, at least a portion of the metallic oxide component may be derived from a hydrolyzable metallic compound or a hydrolysate of the hydrolyzable metallic compound that is added to a coating solution for forming an antifog layer, and the hydrolyzable metallic compound may be at least one selected from a hydrolyzable metallic compound that contains a water repellent group and a hydrolyzable metallic compound that does not contain a water repellent group. Furthermore, the hydrolyzable metallic compound that does not contain a water repellent group may include at least one selected from tetraalkoxysilane and silane coupling agents. Configuring the antifog layer 33 as described above makes it possible to suppress fogging of an information acquisition region 23, and thus an information acquisition device can appropriately acquire information regarding the outside of a vehicle.

It should be noted that the above-described antifog layer 33 is an example and various other known antifog layers may be used, such as antifog layers described in JP 2014-14802A and JP 2001-146585A, for example.

### 3-2. Substrate film

The substrate film 32 is formed of a transparent resin film, and can be formed using polyethylene terephthalate, polyvinyl chloride, polyvinylidene chloride, or acrylic resin, for example. Further, an ultraviolet absorbing agent can be contained in the resin.

Examples of the ultraviolet absorbing agent include organic substances such as benzotriazole compounds [2-(2'-hydroxy-5'-methylphenyl) benzotriazole, 2-(2'-hydroxy-3',5'-di-t-butylphenyl) benzotriazole, and the like], benzophenone compounds [2,2',4,4'-tetrahydroxybenzophenone, 2,4-dihydroxybenzophenone, 2-hydroxy-4-methoxybenzophenone, 2-hydroxy-4-octoxybenzophenone, 5,5'-methylenebis(2-hydroxy-4-methoxybenzophenone), and the like], hydroxyphenyltriazine compounds [2-(2-hydroxy-4-octoxyphenyl)-4,6-bis(2,4-di-t-butylphenyl) -s-triazine, 2-(2-hydroxy-4-methoxyphenyl)-4,6-diphenyl-s-triazine, 2-(2-hydroxy-4-propoxy-5-methylphenyl)-4,6-bis(2,4-di-t-but ylphenyl)-s-triazine, and the like], and cyanoacrylate compounds [ethyl-α-cyano-β,β-diphenylacrylate, methyl-2-cyano-3-methyl-3-(p-methoxyphenyl) acrylate, and the like]. A single ultraviolet absorbing agent may be used independently or two or more types of ultraviolet absorbing agents may be used in combination. The ultraviolet absorbing agent may be at least one organic pigment selected from a polymethine compound, an imidazoline compound, a coumarin compound, a naphthalimido compound, a perylene compound, an azo compound, an isoindolinone compound, a quinophthalone compound, and a quinoline compound.

It is preferable that the substrate film 32 has a transmittance of 5% or less at a wavelength of 380 nm, and a transmittance of 50% or less at a wavelength of 400 nm, for example.

Also, the substrate film 32 needs to have a certain degree of rigidity because the substrate film supports the antifog layer 33. However, the haze ratio tends to be high if the film is too thick. Therefore, the thickness of the substrate film 32 is preferably 30 to 200 µm, for example.

### 3-3. Sticky layer

The sticky layer 31 is only required to be capable of fixing the substrate film 32 to the inner glass plate 12 with sufficient strength as described later. Specifically, it is possible to use a sticky layer made of a resin that has a glass transition temperature set to a desired value and is obtained by copolymerizing acrylic monomers, rubber-based monomers, or a methacrylic monomer and an acrylic monomer that have stickiness at normal temperature. Examples of acrylic monomers that can be used include methyl acrylate, ethyl acrylate, butyl acrylate, stearyl acrylate, and 2-ethylhexyl acrylate, and examples of methacrylic monomers that can be used include ethyl methacrylate, butyl methacrylate, isobutyl methacrylate, and stearyl methacrylate. If the layer is to be subjected to heat lamination, an organic substance that softens at the lamination temperature may be used. In the case of a resin obtained by copolymerizing a methacrylic monomer and an acrylic monomer, the glass transition temperature can be adjusted by changing a blend ratio of the monomers.

### 3-4. First protective sheet

The first protective sheet 34 protects the sticky layer 31 until the antifog sheet 3 is to be fixed to the opening 231 on the laminated glass 1, and is formed of a resin sheet made of polyethylene, polypropylene, polyethylene terephthalate, or the like, to which a releasing agent such as silicone is applied, for example. Although the first protective sheet 34 has the same shape as the sticky layer 31 as described above, the first protective sheet may be larger than the sticky layer. The color of the first protective sheet 34 is not particularly limited and can be selected from various colors.

### 3-5. Second protective sheet

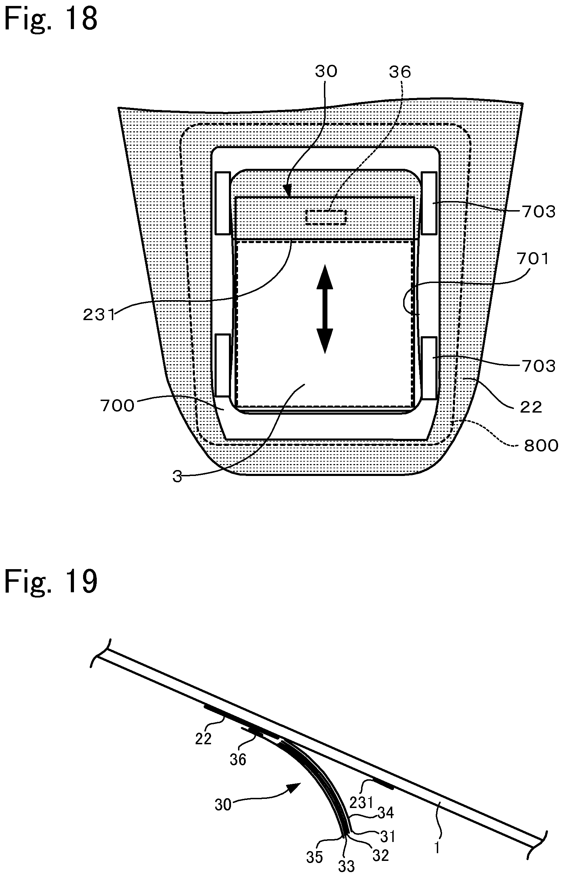

The second protective sheet 35 protects the antifog layer 33 until the antifog sheet 3 is to be fixed to the opening 231 on the laminated glass 1, and can be formed of a resin sheet made of polyethylene, polypropylene, polyethylene terephthalate, or the like. The second protective sheet is preferably formed using a material that curves under its own weight or the weight of the antifog sheet 3 when an end portion is fixed with the temporal fixing member 36 as described later with reference to FIG. 19. This facilitates attachment of the sticky layer 21. The second protective sheet 35 is larger than the antifog sheet 3 as described above, and the following configuration may be employed, for example.

First, as shown in FIG. 10, the width of the second protective sheet 35 in the lateral direction (left-right direction) is set to be approximately the same as the width of the attachment opening 701 of the bracket 700 described later. In this embodiment, the width of the attachment opening 701 in the lateral direction is approximately the same as the width of the opening 231 of the center mask layer 22, and accordingly the width of the second protective sheet 35 in the lateral direction is approximately the same as the width of the antifog sheet 3 in the lateral direction. On the other hand, the length of the second protective sheet 35 in the lengthwise direction (vertical direction) is larger than the length of the antifog sheet 3 in the lengthwise direction. Specifically, the second protective sheet 35 is formed to extend from the upper side of the antifog sheet 3.

The second protective sheet 35 is used to position the antifog sheet 3 as described later, and therefore is preferably transparent or semitransparent so that the antifog sheet 3 can be seen through the second protective sheet. Note that the second protective sheet 35 corresponds to a protective member according to the present invention.

### 3-6. Temporal fixing member

The temporal fixing member 36 is used to temporarily fix the second protective sheet 35 to the laminated glass 1, and can be constituted by a known double sided tape or adhesive, for example. The temporal fixing member needs to be removable because it is used for temporal fixing. There is no particular limitation on the size and shape of the temporal fixing member, and it is only required that the temporal fixing member does not overlap the antifog sheet 3 on the second protective sheet 35. Accordingly, there is no limitation on the distance from the temporal fixing member to the antifog sheet 3.

### 3-7. Manufacturing method of antifog sheet

Next, a method for manufacturing the antifog sheet 3 will be described. First, the antifog layer 33 is formed on one surface of the substrate film 32. The antifog layer 33 can be formed by applying a coating solution for forming the antifog layer 33 onto the substrate film, drying the substrate film onto which the coating solution has been applied, and further performing high-temperature and high-humidity treatment or the like as needed. It is sufficient that a known material and a known method are respectively used as the solvent to be used for the preparation of the coating solution and a method for applying the coating solution.

At this time, the atmosphere is preferably kept at a relative humidity of less than 40%, and more preferably 30% or less. Keeping the atmosphere at a low relative humidity makes it possible to prevent the layer from absorbing an excessive amount of moisture from the atmosphere. If a large amount of moisture is absorbed from the atmosphere, there is a risk that water will enter and remain in the matrix of the layer and deteriorate the strength of the layer.

It is preferable that the step of drying the substrate film onto which the coating solution has been applied includes an air-drying step and a heat-drying step for performing drying by heating. It is preferable to perform the air-drying step by exposing the coating solution to an atmosphere that is kept at a relative humidity of less than 40%, and more preferably 30% or less. The air-drying step can be performed as a non-heating step. In other words, it can be performed at room temperature. When the coating solution contains a hydrolyzable silicon compound, in the heat-drying step, dehydration progresses in which silanol groups contained in the hydrolysates of silicon compounds or the like and hydroxy groups present on an article are involved, and a matrix structure (network of Si-O bonds) including silicon atoms and oxygen atoms develops. The air-drying step can be performed for about 10 minutes, for example.

In order to prevent the decomposition of organic substances such as the water absorbent resin, it is preferable that the temperature applied in the heat-drying step is not excessively high. In this case, an appropriate heating temperature is 300°C or lower, for example, 100 to 200°C, and the heating time is 1 minute to 1 hour.

A high-temperature and high-humidity treatment step may be performed as appropriate during the formation of the antifog layer 33. Performing the high-temperature and high-humidity treatment step may further facilitate the realization of both the antifog properties and the strength of the layer. The high-temperature and high-humidity treatment step can be performed by holding the substrate film with the coating solution applied thereon in the atmosphere at 50 to 100°C at a relative humidity of 60 to 95% for 5 minutes to 1 hour, for example. The high-temperature and high-humidity treatment step may be performed after the application step and the drying step, or after the application step and the air-drying step and before the heat-drying step. In particular, in the former case, a heat-treatment step may be additionally performed after the high-temperature and high-humidity treatment step. This additional heat-treatment step can be performed by holding the substrate film with the coating solution applied thereon in the atmosphere at 80 to 180°C for 5 minutes to 1 hour, for example. Thus, formation of the antifog layer 33 is completed. Thereafter, the second protective sheet 35 is attached on the antifog layer 33 to protect the antifog layer 33. The temporal fixing member 36 may be attached to the second protective sheet 35 in advance, or may be attached to the second protective sheet 35 after the second protective sheet 35 is attached to the antifog layer 33.

Note that the antifog layer 33 formed from the coating solution may be washed and/or wiped with a moist cloth as needed. Specifically, this can be performed by exposing the surface of the antifog layer 33 to a stream of water or wiping it with a cloth containing water. Pure water is suitable as the water used in these steps. It is preferable to avoid using a solution containing a detergent for washing. With this step, dust, dirt, and the like attaching to the surface of the antifog layer 33 are removed, and a clean coating surface can thus be obtained.

Next, the sticky layer 31 is applied onto the other surface of the substrate film 32 and then the first protective sheet 34 is attached. Thus, an antifog laminate is completed. The antifog laminate is cut to a required size as described above, and is attached to a position on the inner glass plate 12 corresponding to the opening 231, as described later.

Note that the antifog layer 33 can be formed by directly applying the above-described antifog layer 33 onto the inner glass plate 12 rather than attaching the above-described antifog sheet 3 to the inner glass plate 12.

### 4. Measurement unit

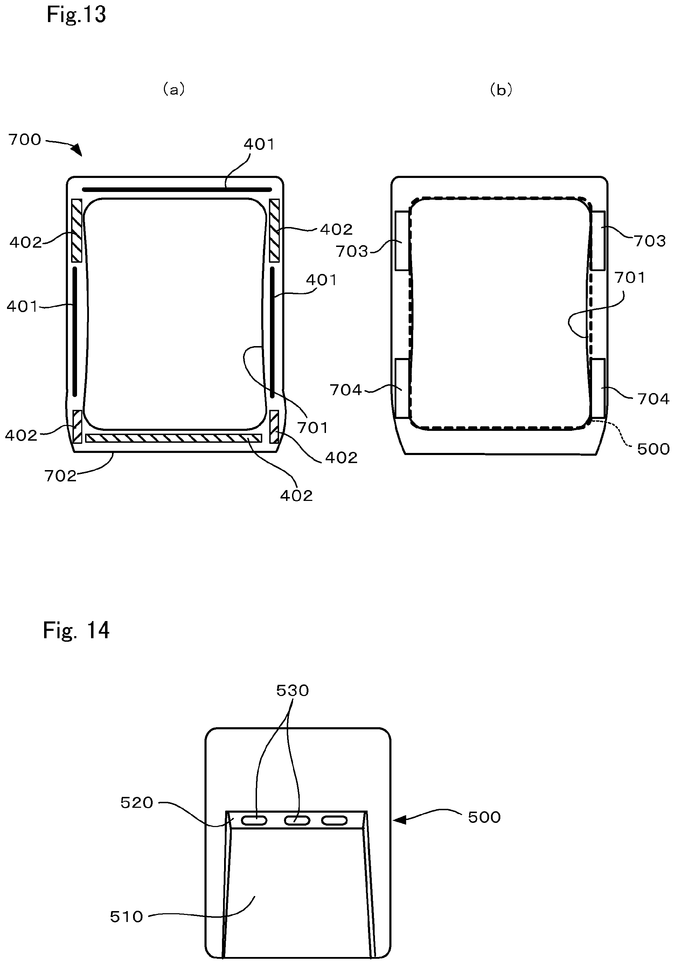

Next, a measurement unit will be described with reference to FIGS. 13 and 14. FIG. 13(a) is a diagram showing a bracket from the vehicle exterior side and FIG. 13(b) is a diagram showing the bracket from the vehicle interior side. FIG. 14 is a diagram showing a sensor from the vehicle exterior side.

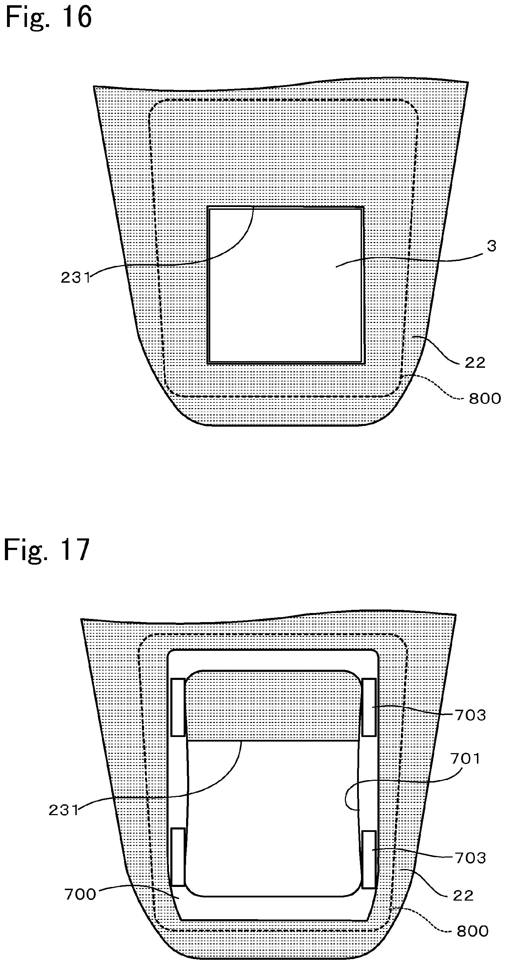

The measurement unit 4 is constituted by a bracket (attachment member) 700 that is fixed to the inner surface of the laminated glass 1, a sensor (information acquisition device) 500 that is supported by the bracket 700, and a cover 800 (see FIG. 17) that covers the bracket 700 and the sensor from the vehicle interior side.

As shown in FIG. 13, the bracket 700 has the shape of a rectangular frame having an attachment opening 701 in which the sensor 500 is arranged, and includes a rectangular main body portion 702 that surrounds the attachment opening 701 and two pairs of support portions 703 and 704 that are arranged on opposite sides of the main body portion 702 and fix the sensor 500 and the cover 800. Support portions that are arranged in an upper portion of the main body portion 702 will be referred to as first support portions 703, and support portions that are arranged in a lower portion of the main body portion 702 will be referred to as second support portions 704. The main body portion 702 has a flat surface that faces the outside of the vehicle, and an adhesive 401 or a piece of double sided tape 402 is attached to the flat surface to fix the main body portion to the mask layer 2 or the laminated glass 1. However, the arrangement of the adhesive and the double sided tape shown in FIG. 13 is an example and any other arrangement may be employed.

Although various adhesives can be employed as the adhesive 401, a urethane resin adhesive or an epoxy resin adhesive can be used, for example. The epoxy resin adhesive has high viscosity and therefore is advantageous in that it is unlikely to flow.

As shown in FIG. 13(a), the sensor 500 is supported by the support portions 703 and 704 of the bracket 700 and is arranged to cover the attachment opening 701. As shown in FIG. 14, the sensor 500 includes a casing having a surface that faces the laminated glass 1 through the attachment opening 701 and in which a recess 510 is formed. The recess 510 is inclined such that its depth is largest at its upper end and decreases toward its lower end. A lens 530 or the like of a camera or various elements such as a light receiving element and a light emitting element of a laser is arranged on a wall surface 520 at the upper end of the recess, but the type and number of lenses or the like are not particularly limited. With this sensor 500, a camera captures an image of the outside or a laser emits and receives light, via the recess 510 and the laminated glass 1. This makes it possible to calculate the distance from the self-vehicle to a preceding vehicle or an obstacle based on the time it takes to receive reflected light with a light receiving element, for example. The calculated distance is transmitted from the sensor to an external apparatus and is used to control a brake, for example.

After a non-illustrated harness or the like is attached, the cover 800 is further attached to the bracket 700 from the vehicle interior side as described later. As a result, the sensor 500 and the bracket 700 cannot be seen from the vehicle interior side. Thus, the sensor 500 is accommodated in a space surrounded by the bracket 700, the cover 800, and the laminated glass 1. Note that the measurement unit 4 cannot be seen from the vehicle exterior side except through the opening 231 as a result of the center mask layer 22 being provided. Also, the opening 231 is surrounded by a bracket 41 and cannot be seen from the vehicle interior side. The sensor 500 may be supported by the cover 800, as well as by the bracket 700 as described above.

### 5. Manufacturing method of windshield

Next, an example of a manufacturing method of the windshield will be described. First, a manufacturing line of glass plates will be described.

### 5-1. Manufacture of laminated glass

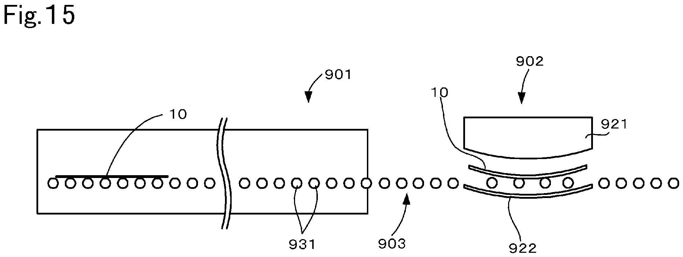

As shown in FIG. 15, the manufacturing line includes a heating furnace 901 and a molding device 902 that are arranged in this order from upstream to downstream. Further, a roller conveyor 903 is arranged so as to run from the heating furnace 901, the molding device 902, and to the downstream side thereof, and a glass plate (outer glass plate 11 or inner glass plate 12) 10 that is to be processed is conveyed by the roller conveyor 903. The glass plate 10 has the shape of a flat plate before it is conveyed into the heating furnace 901, and is conveyed into the heating furnace 901 after the above-described mask layer 2 has been layered on the glass plate 10.

Although the heating furnace 901 may have various configurations, the heating furnace can be an electric heating furnace, for example. The heating furnace 901 includes a furnace main body in the shape of a square tube that is open at the upstream and downstream end portions, and the roller conveyor 903 is arranged therein so as to run from upstream to downstream. Heaters (not shown) are respectively arranged on an upper surface, a lower surface, and a pair of side surfaces of the inner wall of the furnace main body, and heat the glass plate 10 that passes through the heating furnace 901, to a temperature at which molding can be performed, for example, approximate to the softening point of the glass.

The molding device 902 is configured to press the glass plate 10 between an upper mold 921 and a lower mold 922 to mold the glass plate into a predetermined shape. The upper mold 921 has a curved surface that protrudes downward and covers the entire upper surface of the glass plate 10, and is configured to be movable up and down. The lower mold 922 has the shape of a frame that conforms to the peripheral portion of the glass plate 10, and includes an upper surface that is curved to conform to the upper mold 921. With this configuration, the glass plate 10 is press-molded between the upper mold 921 and the lower mold 922 into a final curved shape. The roller conveyor 903 is arranged inside the frame of the lower mold 922, and the roller conveyor 903 is movable up and down and runs through the frame of the lower mold 922. Further, an annealing device (not shown) is arranged downstream of the molding device 902 to cool the molded glass plate, though this is not shown.

The above-described roller conveyor 903 is well known and includes a plurality of rollers 931 that are rotatably supported at both end potions and are arranged at predetermined intervals. Although the rollers 931 can be driven by various methods, for example, a sprocket is attached to an end portion of each roller 931 and a chain is wound around the sprockets to drive the rollers. The conveyance speed of the glass plate 10 can be adjusted by adjusting the rotation speed of the rollers 931. Note that the lower mold 922 of the molding device 902 may come into contact with the entire surface of the glass plate 10. Configurations of the upper mold and the lower mold are not particularly limited and any other configurations may be employed as long as the molding device 902 can mold the glass plate 10.

After the outer glass plate 11 and the inner glass plate 12 are molded as described above, the interlayer 13 is sandwiched between the outer glass plate 11 and the inner glass pate 12, and these are placed into a rubber bag and preliminarily bonded together at about 70 to 110°C under vacuum suction. Preliminary bonding can be performed using a method other than this method. For example, the interlayer 13 is sandwiched between the outer glass plate 11 and the inner glass plate 12, and these are heated at 45 to 65°C in an oven. Subsequently, this laminated glass is pressed by a roller at 0.45 to 0.55 MPa. Then, this laminated glass is again heated at 80 to 105°C in an oven and thereafter again pressed by a roller at 0.45 to 0.55 MPa. Thus, preliminary bonding is finished.

Next, permanent bonding is performed. The preliminarily bonded laminated glass is permanently bonded using an autoclave at a pressure of 8 to 15 atmospheres and at 100 to 150°C, for example. Specifically, permanent bonding can be performed under the conditions of a pressure of 14 atmospheres and at 145°C, for example. Thus, the laminated glass according to this embodiment is manufactured.

### 5-2. Attachment of antifog sheet

As shown in FIG. 16, the antifog sheet 3 is attached to the inner glass plate 12 exposed through the opening 231. At this time, the first protective sheet 34 is removed from the antifog laminate 30, and the thus exposed sticky layer 31 is attached to the inner glass plate 12. Note that the second protective sheet 35 is not removed and is kept covering the antifog layer 33.

### 5-3. Attachment of bracket

Next, attachment of the bracket 700 will be described with reference to FIG. 17. FIG. 17 shows the bracket 700, which is attached to the center mask layer 22, from the vehicle interior side. As shown in this figure, the bracket 700 is attached to the center mask layer 22 such that the opening 231 of the center mask layer 22 is arranged inside the attachment opening 701. In addition to the opening 231 of the center mask layer 22, a portion of the center mask layer 22 is exposed through the attachment opening 701. That is, a portion of the center mask layer 22 is arranged in an upper portion of the attachment opening 701 and the opening 231 of the center mask layer 22 is arranged in a lower portion of the attachment opening 701. When the sensor 500 is thereafter attached to the bracket 700, for example, light is emitted from the sensor 500 to the outside of the vehicle through the attachment opening 701 of the bracket 700 and the opening 231 of the mask layer 2.

Right before the sensor 500 is attached to the support portions 703 and 704, the antifog layer 33 is exposed by removing the second protective sheet 35, and then the sensor 500 and the cover 800 are attached to the bracket 700 in this order. Thus, attachment of the measurement unit 4 is finished.

### 5-4. Post-attachment of antifog sheet

As described above, the antifog sheet 3 is attached to the inner glass plate 12 before the bracket 700 is attached, but the antifog sheet 3 can also be attached to the inner glass plate 12 after the bracket 700 is attached. This is the case in post-attachment of the antifog sheet 3 to a vehicle that is not provided with the antifog sheet 3 or replacement of the antifog sheet 3, for example. However, once the bracket 700 has been attached, it is difficult to attach the antifog sheet 3 within the attachment opening 701 of the bracket 700. For example, the opening 231 of the center mask layer 22 is surrounded by the bracket 700, and the rectangular main body portion 702 surrounding the attachment opening 701 has a larger thickness than the antifog laminate 30, and therefore freedom of movement of a hand or a spatula is low. For this reason, it is difficult to attach the antifog sheet 3 to the opening 231 after the bracket 700 has been attached. Therefore, the following describes attachment of the antifog sheet 3 using the above-described antifog laminate 30 with reference to FIGS. 17 to 22.

First, the cover and the sensor 500 are removed to expose the opening 231 of the center mask layer 22 and a portion of the center mask layer 22 on the vehicle interior side as shown in FIG. 17. Next, as shown in FIG. 18, the antifog laminate 30 is arranged within the attachment opening 701 of the bracket 700 and positioning of the antifog sheet 3 is performed. In this embodiment, the width of the second protective sheet 35 in the lateral direction is the same as the width of the attachment opening 701 in the lateral direction, and therefore positioning in the lateral direction is unnecessary. Accordingly, positioning is performed by sliding the antifog laminate 30 up or down within the attachment opening 701. That is, the antifog laminate 30 is slid such that the antifog sheet 3 that can be seen through the second protective sheet 35 matches the opening 231. When positioning of the antifog sheet 3 is finished, the temporal fixing member 36 is fixed to the center mask layer 22.

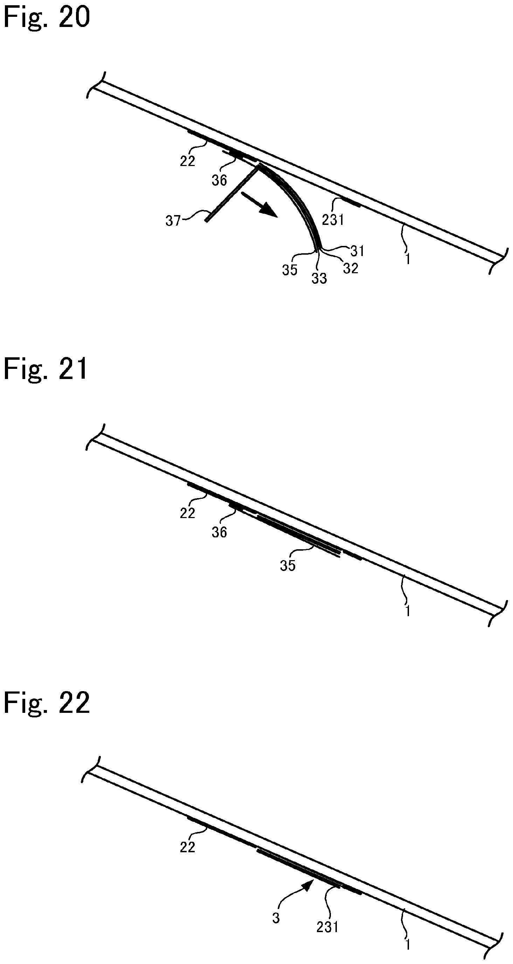

When the temporal fixing member 36 is fixed to the center mask layer 22 as described above, the antifog sheet 3 side of the antifog laminate 30 hangs down from the temporal fixing member 36 as shown in FIG. 19, because the antifog laminate is a sheet material. Next, as shown in FIG. 20, the first protective sheet 34 is removed to expose the sticky layer 31. Then, the second protective sheet 35 is pressed using a spatula 37 from an upper portion of the second protective sheet 35 toward a lower portion thereof. As a result, as shown in FIG. 21, the sticky layer 31 is fixed to the inner glass plate 12 exposed through the opening 231 from an upper portion of the sticky layer 31 toward a lower portion thereof. Finally, as shown in FIG. 22, the second protective sheet 35 is removed from the antifog layer 33, and a portion that is fixed with the temporal fixing member 36 is removed from the center mask layer 22. Thus, attachment of the antifog sheet 3 is finished. Note that the sensor 500 and the cover 800 are attached after this, and the second protective sheet 35 may be kept attached until the sensor and the cover are attached.

Although a method has been described in which the antifog sheet 3 is attached to a windshield on which the bracket 700 is provided in advance, the antifog sheet 3 may be attached to the laminated glass 1 by the above-described steps after the bracket 700 is attached to the laminated glass in a process of manufacturing a windshield.

### 6. Features

The following effects can be achieved with the above-described windshield.

### 6-1.

The second protective sheet 35 is larger than the antifog sheet 3, and therefore, after the sticky layer 31 is fixed to the laminated glass 1, it is possible to easily remove the second protective sheet 35 from the antifog sheet 3 by holding a portion of the second protective sheet 35 extending from the antifog sheet 3 with fingers. Furthermore, the portion of the second protective sheet 35 extending from the antifog sheet 3 can be held with fingers during positioning of the antifog sheet 3 with respect to the opening 231, and therefore positioning can be performed in a state where the entirety of the antifog sheet 3 is in contact with the laminated glass 1. This facilitates positioning. Such a configuration of the antifog laminate 30 is advantageous particularly because the laminated glass 1 is curved. This also applies to the following effects.

### 6-2.

The temporal fixing member 36 is provided on the second protective sheet 35, and therefore the second protective sheet 35 can be temporarily fixed to the laminated glass 1. Therefore, it is possible to attach the antifog sheet 3 to the laminated glass 1 by removing the first protective sheet 34 while maintaining a state where the antifog sheet 3 is positioned with respect to the opening 231. Particularly, in this embodiment, the second protective sheet 35 is temporarily fixed to the laminated glass 1 on the upper side of the antifog sheet 3, and therefore the lower portion of the antifog sheet 3 hangs down. Accordingly, the sticky layer 31 can be fixed to the laminated glass 1 from the upper portion of the antifog sheet 3 toward the lower portion thereof. This facilitates fixing of the sticky layer 31 because the sticky layer 31 can be fixed by moving the spatula 37 downward. Moving the spatula 37 downward is easier than moving it upward because fixing is performed in a limited interior space of the vehicle and the laminated glass 1 is inclined. Moreover, even if the thickness of the sticky layer 31 is increased in its midway portion, for example, it is possible to prevent warping due to the increase in the thickness if the spatula 37 is moved downward, that is, only in one direction.

Further, the following effects can also be achieved with the temporal fixing member 36. First, the temporal fixing member 36 is made smaller than the antifog sheet 3, this is because a temporal fixing member that is too large is inconvenient to remove it and attach again, for example. On the other hand, a temporal fixing member that is too small may be removed from the laminated glass 1 during work, and therefore the size and adhesiveness of the temporal fixing member are preferably such that the temporal fixing member cannot be easily removed. The temporal fixing member 36 is attached to the center mask layer 22 on the outside of the opening 231, and therefore even if a mark of the temporal fixing member 36 is left on the center mask layer 22 after the second protective sheet 25 has been removed, there is no adverse effect on acquisition of information using light passing through the opening 231.

### 6-3.

In this embodiment, the width of the second protective sheet 35 in the lateral direction is approximately the same as the width of the attachment opening 701 of the bracket 700 in the lateral direction, and therefore positioning of the antifog sheet 3 can be performed by merely moving the antifog laminate 30 up or down in the attachment opening 701. This facilitates positioning.

### 6-4.

The opening 231 of the mask layer 2 can be kept from fogging up by arranging the antifog sheet 3 in the opening 231. As a result, it is possible to prevent occurrence of problems such as, when light is emitted or received by the measurement unit 4 through the opening 231, the passage of light through the opening 231 being adversely affected by fogging of the opening 231 resulting in a failure to accurately perform measurement.

Particularly, even when a heater is turned on, the temperature tends to be low in an upper portion of the vehicle interior in which the opening 231 of the mask layer 2 is provided, and accordingly fogging is likely to occur. Therefore, it is advantageous to provide the antifog layer 33 at such a position. Further, the opening 231 of the mask layer 2 in which the antifog layer 33 is provided is located opposite to the measurement unit 4 or is surrounded by the bracket 41. Therefore, there is a problem that heated air emitted from a heater or a defroster tends not to reach the opening. Therefore, it is worthwhile to provide the antifog layer 33 in such a region where the heated air tends not to reach as described above.

Furthermore, the following effects can also be achieved. There is a risk that a plasticizer that is detached from an interior part (for example, a resin molded article) of the vehicle and is included in air may attach to the antifog layer 33. If the plasticizer attaches to the antifog layer 33, the antifog function may be impaired. However, the measurement unit is arranged at a position opposite to the antifog layer 33 and the antifog layer 33 is surrounded by the bracket 700 as described above, and therefore attachment of the plasticizer to the antifog layer 33 can be prevented. As a result, it is possible to prevent impairment of the antifog function, particularly the water absorption function in the case of a water absorbent type antifog layer 33. In the case of a hydrophilic type antifog layer, the plasticizer tends to be linked to hydrophilic groups contained in the antifog layer, and therefore it is preferable that the measurement unit 4 is arranged opposite to the antifog layer and the antifog layer is surrounded by the bracket 700 as described above.

Note that, if the plasticizer attaches to the surface of the water absorbent type antifog layer 33 and accumulates for a long period of time, water absorbing properties are hindered and the antifog performance is impaired. However, the water absorbing performance can be restored if the plasticizer is wiped away with a cloth containing water, for example. On the other hand, if the plasticizer attaches to the surface of the hydrophilic type antifog layer 33, the plasticizer is firmly bonded to the hydrophilic groups and hydrophilic properties are impaired. Therefore, there is a risk that an image captured through the antifog layer 33 may be distorted due to a difference in thickness of a formed water layer or the antifog performance may be impaired in a short period of time.

### 7. Variations

Although one embodiment of the present invention has been described, the present invention is not limited to the above embodiment, and can be carried out with variations without departing from the gist of the present invention. Note that the following variations can be combined as appropriate.

### 7-1.

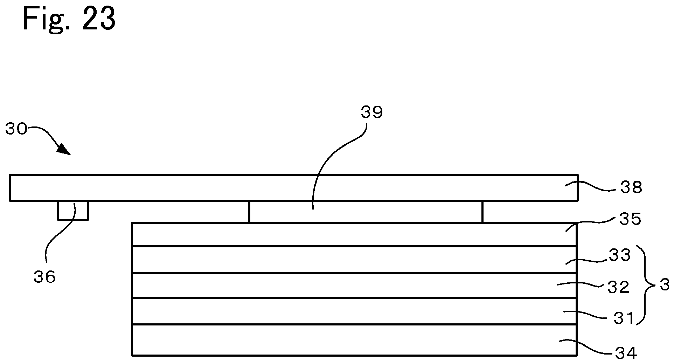

The second protective sheet may have the same size as the antifog sheet. In this case, a sheet-shaped attachment jig 38 is prepared separately and the second protective sheet 35 is attached to the attachment jig 38 as shown in FIG. 23. The attachment jig 38 has the same functions as those of the second protective sheet 35 in the above embodiment. Accordingly, the material and shape of the attachment jig 38 may be the same as those of the second protective sheet 35 in the above embodiment, but it is also possible to employ a different material or shape. For example, the attachment jig 38 may be larger than the second protective sheet 35. The above-described temporal fixing member 36 is attached to the attachment jig 38.

Although there is no particular limitation on the method for fixing the second protective sheet 35 to the attachment jig 38, a fixing member 39 such as a piece of double sided tape or an adhesive can be used, for example. The second protective sheet 35 and the attachment jig 38 may be permanently fixed together or temporarily fixed together. Accordingly, a fixing member that is the same as the above-described temporal fixing member 36 can be used. In this case, it is possible to form the fixing member 39 to extend from the second protective sheet 35 and use the extended portion as the temporal fixing member 36.

When such an antifog laminate is used, attachment is performed as described below. First, an antifog sheet 3 with first and second protective sheets 34 and 35 attached thereto (hereinafter referred to as antifog laminate parts) is prepared. Next, the attachment jig 38 is fixed to the antifog sheet 3. That is, the second protective sheet 35 of the antifog laminate parts is fixed to the attachment jig 38. Note that the temporal fixing member 36 is provided on a surface of the attachment jig 38 to which the second protective sheet 35 is fixed. Then, the antifog laminate is arranged within the attachment opening 701 of the bracket 700 and positioning of the antifog sheet 3 is performed by sliding the antifog laminate on the laminated glass 1. Subsequent steps are the same as those in the above embodiment. That is, the attachment jig 38 is fixed to the second protective sheet 35, and therefore these are treated as an integral part. Accordingly, the attachment jig 38 and the second protective sheet 35 are removed together from the antifog sheet 3 after the sticky layer 31 has been fixed to the laminated glass 1. Thus, attachment of the antifog sheet 3 is finished.

The use of such an antifog laminate has the following effects in addition to the effects achieved in the above-described first embodiment. For example, if the opening 231 of the center mask layer 22 is common to different automobiles but the shape of the bracket differs between the automobiles, it is necessary, in the above embodiment, to prepare second protective sheets 35 corresponding to different bracket shapes. In contrast, if the antifog laminate as shown in FIG. 23 is used, the same antifog laminate parts can be used for all types of automobiles to which the opening 231 of the center mask layer 22 is common. It is sufficient to prepare attachment jigs 38 for respective types of automobiles that differ from each other in the bracket. Furthermore, if the attachment jig 38 is temporarily fixed to the second protective sheet 35, the attachment jig 38 can be used many times, and therefore the cost can be reduced.

### 7-2.

The width of the opening 231 of the center mask layer 22 is approximately the same as the width of the attachment opening 701 of the bracket 700 in the above embodiment, but is not limited as such. That is, the size of the opening 231 of the center mask layer 22 is not particularly limited as long as it is smaller than the attachment opening 701 of the bracket 700. Also, the number of openings 231 is not particularly limited.

### 7-3.

Although the width of the attachment opening 701 of the bracket 700 in the lateral direction is the same as the width of the second protective sheet 35 in the above embodiment, the size of the second protective sheet 35 or the attachment jig 38 is not particularly limited. The second protective sheet 35 and the attachment jig 38 are preferably smaller than the attachment opening 701, but may be larger than the attachment opening 701 as long as the antifog sheet 3 can be attached to the laminated glass 1.

### 7-4.

The position of the temporal fixing member is not particularly limited. Although the temporal fixing member 36 is arranged on the upper side of the antifog sheet 3 in the above embodiment, the temporal fixing member is only required to be adjacent to (or spaced from) the antifog sheet 3 and may be provided in a lower portion or a lateral portion of the second protective sheet 35 or the attachment jig 38. In this case, the sticky layer 31 is fixed by moving the spatula 37 from the temporal fixing member 36 side toward the antifog sheet 3. Although the antifog laminate 30 is provided with the temporal fixing member 36 in the above embodiment, the temporal fixing member 36 does not necessarily have to be provided. That is, it is sufficient that at least the second protective sheet 35 or the attachment jig 38 is larger than the antifog layer 33.

### 7-5.

The mask layer 2 has a three-layer configuration as described above, but is not limited as such. That is, although the silver layer 242 is provided in the above embodiment in order to block electromagnetic waves, a method of providing a single layer in which silver and a ceramic layer are mixed may be used, and another material such as copper or nickel may be laminated as long as electromagnetic waves can be blocked. Although the silver layer 242 is sandwiched between the ceramic layers so as not to be seen from the outside, a member such as the above-described cover can be used instead of covering the silver layer 242 with the ceramic layers. The silver layer 242 acting as an electromagnetic wave blocking layer does not necessarily have to be provided, and it is sufficient that at least a layer for concealment from the outside is formed.

The color of the mask layer 2 may be a color other than black, and is not particularly limited as long as it is a dark color such as brown, gray, or dark blue such that the view from the outside of the vehicle is blocked and the inside of the vehicle is concealed. Alternatively, a portion or the entirety of the mask layer may be constituted by a blocking film that is attachable to a glass plate, and the view from the outside of the vehicle may be blocked by the blocking film. Note that, if the blocking film is attached to the vehicle exterior side surface of the inner glass plate 12, the blocking film can be attached before preliminary bonding or after permanent bonding.

From the viewpoint of preventing fogging of a path of light through the glass plate, the mask layer does not necessarily have to be provided, and it is sufficient that the antifog layer is formed in a region (information acquisition region) through which the light passes.

### 7-6.

In the above embodiment, the sensor 5 for measuring the distance between vehicles is used as an information acquisition device in the present invention, but there is no limitation to this, and various information acquisition devices can be used. That is, the information acquisition device is not particularly limited as long as it emits and/or receives light in order to acquire information from the outside of the vehicle. Various devices can be used such as a visible light and/or infrared rays camera for measuring the distance between vehicles, a light receiving device for receiving signals from the outside of the vehicle such as an optical beacon, a camera using visible light and/or infrared rays that reads white lines on the road or the like as images, or a stereo camera. If a stereo camera is used, two openings need to be provided.

### List of Reference Numerals

- 1: Laminated glass
- 3: Antifog sheet
- 31: Sticky layer
- 32: Substrate film
- 33: Antifog layer
- 34: First protective sheet
- 35: Second protective sheet
- 36: Temporal fixing member
- 38: Attachment jig
- 500: Sensor (information acquisition device)
- 700: Bracket (attachment member)

## Claims

1. An antifog laminate configured to be attached to an information acquisition region of a windshield that includes a laminated glass that is located opposite to an information acquisition device for acquiring information from the outside of a vehicle by emitting and/or receiving light, at least a portion of the laminated glass being curved, and the laminated glass having at least one information acquisition region through which the light passes, the antifog laminate comprising:
an antifog sheet including a sticky layer, a substrate film, and an antifog layer that are layered in this order;
a sheet-shaped protective material that removably covers the antifog layer and is larger than the antifog layer; and
a first protective sheet that removably covers the sticky layer.

2. The antifog laminate according to claim 1,
wherein the protective material includes:
a second protective sheet that removably covers the antifog layer; and
a sheet-shaped attachment jig that is attached to the second protective sheet and is larger than the second protective sheet.

3. The antifog laminate according to claim 1 or 2,
wherein a temporal fixing member for temporarily fixing the protective material to the laminated glass is provided on a surface of the protective material facing the antifog layer.

4. The antifog laminate according to any one of claims 1 to 3,
wherein the windshield further includes an attachment member that is fixed to the laminated glass and is configured to fix the information acquisition device to the laminated glass,
the attachment member is fixed to the laminated glass so as to surround the information acquisition region and has an attachment opening to which the information acquisition device is attached opposite to the information acquisition region, and
a length between at least one pair of opposite sides of the protective material corresponds to a length of the attachment opening in at least one of a lengthwise direction and a lateral direction.

5. A method for attaching an antifog sheet to an information acquisition region of a windshield that includes a laminated glass that is located opposite to an information acquisition device for acquiring information from the outside of a vehicle by emitting and/or receiving light, at least a portion of the laminated glass being curved, and the laminated glass having at least one information acquisition region through which the light passes, the method comprising steps of:
preparing an antifog laminate that includes
an antifog sheet including a sticky layer, a substrate film, and an antifog layer that are layered in this order,
a sheet-shaped protective material that removably covers the antifog layer and is larger than the antifog layer, and
a first protective sheet that removably covers the sticky layer,
removing the first protective sheet and attaching the sticky layer to the information acquisition region; and
removing the protective material.

6. The method for attaching an antifog sheet according to claim 5, further comprising
before the step of attaching the sticky layer, a step of temporarily fixing a region of the protective material other than a region where the antifog layer is provided outside the information acquisition region of the laminated glass.

7. The method for attaching an antifog sheet according to claim 6,
wherein, in the step of temporarily fixing, a portion of the protective material on an upper side of the antifog sheet is temporarily fixed to the laminated glass.

8. The method for attaching an antifog sheet according to any one of claims 5 to 7,
wherein the windshield further includes an attachment member that is fixed to the laminated glass and is configured to fix the information acquisition device to the laminated glass,
the attachment member is fixed to the laminated glass so as to surround the information acquisition region and has an attachment opening to which the information acquisition device is attached opposite to the information acquisition region, and
a length between at least one pair of opposite sides of the protective material corresponds to a length of the attachment opening in at least one of a lengthwise direction and a lateral direction.
